(19) Europäisches Patentamt / European Patent Office / Office européen des brevets

(11) EP 2 822 394 B1

(12) **EUROPEAN PATENT SPECIFICATION**

(45) Date of publication and mention
of the grant of the patent:
**10.10.2018 Bulletin 2018/41**

(21) Application number: **13717537.8**

(22) Date of filing: **08.03.2013**

(51) Int Cl.:
*A23J 3/08* (2006.01)    *A23J 3/14* (2006.01)
*A23J 3/16* (2006.01)    *A23J 3/18* (2006.01)

(86) International application number:
**PCT/GB2013/050578**

(87) International publication number:
**WO 2013/132265 (12.09.2013 Gazette 2013/37)**

(54) **PROCESS FOR MODIFYING PROTEINS**

VERFAHREN ZUR MODIFIZIERUNG VON PROTEINEN

PROCÉDÉ POUR MODIFIER DES PROTÉINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2012 GB 201204160**

(43) Date of publication of application:
**14.01.2015 Bulletin 2015/03**

(73) Proprietor: **Nandi Proteins Limited
Edinburgh EH2 4HQ (GB)**

(72) Inventors:
• **CAMPBELL, Lydia Johanna
Milnathort
Perth and Kinross EH14 4AS (GB)**
• **GU, Xin
Edinburgh EH11 2JA (GB)**

(74) Representative: **EIP
EIP Europe LLP
Fairfax House
15 Fulwood Place
London WC1V 6HU (GB)**

(56) References cited:
**EP-A2- 0 192 988      WO-A1-00/18249
WO-A1-02/49442      WO-A2-2008/032039
US-A- 5 480 973**

• **SNYDER S L ET AL: "An improved
2,4,6-trinitrobenzenesulfonic acid method for the
determination of amines", ANALYTICAL
BIOCHEMISTRY, ACADEMIC PRESS INC, NEW
YORK, vol. 64, no. 1, 1 March 1975 (1975-03-01),
pages 284-288, XP024829699, ISSN: 0003-2697,
DOI: 10.1016/0003-2697(75)90431-5 [retrieved on
1975-03-01] cited in the application**

Remarks:
The file contains technical information submitted after
the application was filed and not included in this
specification

EP 2 822 394 B1

**Description**

FIELD

The present invention relates to a process for modifying a protein, and more particularly to modifying a protein by way of a controlled heat-treatment process that affords a denatured and glycated protein.

BACKGROUND

Modification of the functionality of food proteins by glycation due to the Maillard reaction has been well-documented.

As is known, glycation is a non-enzymatic process whereby a sugar molecule, or certain oligosaccharides or polysaccharides, react with proteins in the absence of enzymatic control over the reaction. Where enzymes are involved in related reactions, such reactions are referred to as glycosylations. In contrast to glycosylations, typically exquisitely controlled biological reactions, glycations are generally much less controlled processes. Glycation reactions may occur both inside and outside living systems. As an example, glycation reactions generally take place whenever sugars (or oligosaccharides or polysaccarides) are cooked with proteins or fats.

In its most commonly described manifestation, the Maillard reaction occurs between reducing sugars and free amino groups found in food proteins. As with caramelisation, therefore, the Maillard reaction may be regarded as a form of non-enzymatic browning.

Whey is generally defined as a liquid by-product from the manufacture of cheese and casein by the acid or rennet coagulation of milk. The whey obtained from acid coagulation is called acid whey; sweet whey is obtained from rennet coagulation. Liquid whey typically consists of the following: 88.7 % w/v water, 0.9% w/v protein (mostly lactalbumin), 5.1% w/v lactose, 0.3% w/v fat and 0.5% w/v minerals. Whole dry whey generally comprises 12% by weight of protein. The total solids content in liquid whey is typically in the range 5-10% w/v. Large-scale drying techniques have been developed in recent years, which make the production of dry whey solids both technically possible and economically feasible. A large proportion of dried whey produced is still used as animal feed.

In many industrial processes whey proteins may be purified by advanced ultrafiltration, microfiltration, nanofiltration or ion-exchange techniques. As is known by those skilled in the art, the concentration of proteins present in whey may be modified (typically increased) in such ways, for example through removal of lactose and salts by ultra-filtration; or by removal of crystallised lactose from the whey.

After purification, wheys may be dried by any convenient means, such as evaporation or lyophilisation, but are typically spray-dried by conventional spray-drying processes as described in the Spray-drying handbook (Keith Masters, 5th edition, Longman Scientific & Technical). Native whey does not denature when dried using conventional spray-drying techniques: "although spray-dried products comes into contact with hot air, at no stage during the process does the product temperature become high enough to cause product denaturation" (Spray-drying handbook, *infra*). The spray-dried whey proteins are not denatured and will form gels or coagulate when heated or acidified.

Whilst spray-drying whey does not lead to protein denaturation, a degree of denaturation is often imparted by any processes used to prepare whey-derived products intended for human consumption. The reason for this arises out of considerations of safety: albumins must be pasteurised prior to their incorporation into food products. When albumins are subjected to heat treatment, however, there is a considerable risk of the albumin coagulating, which generally results in processing difficulties and adverse effects on the texture, mouthfeel, and other properties of the final food product in which it is used. Conventionally therefore manufacturers have gone to considerable lengths to avoid any denaturation of the albumin as far as possible in order to prevent the albumin from coagulating.

Improved functional properties imparted by the Maillard reaction upon whey protein-containing material are described in WO00/18249. However, WO00/18249 specifically instructs that the Maillard-type glycation reactions taught therein are practised without causing denaturation of the whey protein.

Consistent with this teaching the protein and sugar mixtures that are reacted are present in a powdered form with very low water activity. The reason for this is probably that the glycation reactions proceed more quickly at low water contents, mainly due to concentration effects.

Whilst the Maillard reaction can be accelerated in liquid products by the application of heat, denaturation of globular and globulin proteins is difficult to control, and is generally associated with loss of functional properties. Therefore the glycation method of choice in the prior art is typically to heat-treat protein powders in the presence of reducing sugars in an environment of controlled humidity, and typically of low water activity as described in WO00/18249, at a temperature below the denaturation temperature of the protein concerned. Whilst increased functional properties of glycated (non-denatured) food proteins, such as increased heat stability, acid stability and improved emulsifying ability, have been reported, such processes have the disadvantage that the protein-containing raw material (e.g. whey) has to be dried, e.g. by spray-drying, before it is glycated.

A further disadvantage of glycation of non-denatured protein powders under conditions of low water activity is that the duration of the process can take several days to complete which adds to the processing costs.

A further disadvantage of glycating (non-denatured) protein powders is that it is more difficult to obtain a homogenous, or controlled, degree of glycation than achievable with liquids. Whilst WO00/18249 describes heating to temperatures as high as 75°C, the lack of denaturation of proteins under the conditions described in this publication is presumably because of the low water activities: the presence of water is a prerequisite for denaturation of globular and globulin proteins. It should also be noted that none of the examples of this publication refer to heat-treatment of powders at temperatures higher than 50 °C.

Hitherto, as is mentioned above, glycation reactions accompanying denaturation of proteins (e.g. globular or globulin proteins) in liquid mixtures are usually associated with decreased functional and nutritional properties of the proteins. One reason is that heat-induced denaturation is usually not controlled, and the functional intermediate denaturation products, such as soluble aggregates, can be difficult to process. Thus, whilst the heat treatment of aqueous mixtures of proteins, e.g. globular and globulin protein-containing liquids such as egg white, soy and whey, is relatively widespread in the food industry, and has been used for a variety of purposes over the years, such treatments generally involve more or less extensive heat treatment, which often results in complete denaturation of the protein molecules, with extensive aggregation of the proteins resulting in the formation of large aggregates in the case of more dilute liquids and gelation in the case of more concentrated liquids.

Referring to whey as an example, various procedures for the preparation of whey protein aggregates from sweet and acid whey with sizes ranging in 0.1-10 $\mu$m have been the subject of many patent applications in the past 10 to 20 years. A summary of various prior art processes can be found in US patent no. 6,767,575. The significance of various different variables such as heating temperatures, holding times, pH values and different heating procedures is discussed. None of these prior disclosures describes the manufacture of whey protein aggregates from a whey protein-containing solution having a protein concentration higher than 15% per weight of water, i.e. a protein concentration of more than 15 g per 100 g of liquid. Heat treatment of liquid whey at protein concentrations higher than 15% presents a particular problem as it often leads to uncontrolled gelation. On the other hand, dilution of the liquid whey to protein concentrations lower than 15% often necessitates evaporation after heat denaturation to 15-28% protein (corresponding to 25-30% total solids (TS)), in order to enable economical spray-drying, which adds considerably to the processing costs.

In WO02/49442, it is reported that by carefully controlling the denaturation of albumins, in particular those found in whey, it is possible to obtain an improved denatured whey powder upon spray-drying.

As is explained in WO02/49442, different sets of conditions may be used to achieve a desired degree of denaturation with longer times being generally required at lower treatment temperatures and vice versa. As is made clear in WO02/49442, the careful and controlled denaturation of albumin is important to obtaining the claimed fat and caseinate replacement. For example, it is recited on page 8 of WO02/49442 that "denaturation can be safely obtained by means of a thermal treatment step by using a temperature of from 55 to 85 °C...for whey albumin there is preferably used a temperature of from 65 to 80 °C." Such thermal treatments, typically using plate heat exchangers, are distinctive from the use of the intensive, uncontrolled heat treatment by steam injection combined with high-shear homogenization to reduce the size of large coagulates as taught in for example, US 5,494,696. In US 5,494,696, denaturation by steam-injection leads quickly to a second stage of change/denaturation characterized by irreversible loss of secondary structure and the formation of disulfide bonds which result in large gelled particles or coagulates, which must be subject to high shear homogenization in order to form a reduced homogenous particle size.

Thus, denaturation by the methods of WO02/49442 achieves a "first-stage" denaturation that allows unfolding of the long protein molecule and exposure of unreacted sulfhydryl groups and hydrophobic and hydrophilic groups (see, for example page 3, lines 10-17 and page 11, lines 13-20 of WO02/49442), which is initially reversible until the structure is stabilized by hydrophobic interaction with surrounding molecules to form small aggregates.

Whilst the process taught in WO02/49442 is advantageous, there is no description in that document, or indeed elsewhere in the prior art, of the measurement of the degree of glycation that accompanies the denaturation reactions described. Indeed, an additional reason for the association of decreased functional properties of glycated, denatured proteins may be because of the difficulty of maintaining control over the degree of glycation that is taking place in parallel with protein denaturation. One of the reasons for this is that the degree of glycation can be difficult to determine at-line (e.g. in real time or near real time during a manufacturing process) due to the aggregated state of (denatured) proteins. Accordingly, no process utilising liquid starting material has been reported that produces denatured, glycated protein-containing products, in which control, e.g. as a result of monitoring, is effected over the degree of glycation. US5480973A discloses a clear gel obtained by the reaction of a globular protein with a reducing sugar. The process comprises reacting an aqueous dispersion of a protein with a reducing sugar in the presence of a denaturing agent and/or denaturing conditions.

SUMMARY

The present invention arises from our finding that, by monitoring the degree of glycation during heat-denaturation of liquid protein-containing materials, it is possible to control and generally improve the functional properties of the resultant glycated and denatured protein-containing products.

In some embodiments, the process for denaturation and glycation according to the present invention can be achieved in a relatively short time. In some embodiments, the process for denaturation and glycation may have a duration of less than 2 hours. In some embodiments, the process for denaturation and glycation may have a duration of less than 1 hour.

The invention provides a process for glycating and denaturing a globulin or globular protein in a liquid according to the appended claims.

BRIEF DESCRIPTION OF THE FIGURES

Fig. 1. depicts the effect of time of heat-treatment at 75 °C on turbidity, denaturation and glycation of a solution comprising (10% protein w/v)of Hiprotal 865 (a whey protein concentrate comprising 65% protein and 20% lactose w/w).

Fig. 2. depicts the effect of heat-treatment of a solution comprising (10% protein w/v) of whey protein isolate (WPI) comprising 95% protein and no lactose with or without 5% added lactose (w/v) on the average oil droplet size of an emulsion at pH 4.5.

Fig. 3. depicts the effect of heat-treatment of a solution comprising (10% protein w/v) of whey protein isolate (WPI) comprising 95% protein and no lactose with or without 5% added lactose (w/v) on the turbidity of the solution.

Fig. 4. depicts the effect of heat-treatment of a solution comprising (10% protein w/v) of whey protein isolate (WPI) comprising 95% protein and no lactose with or without 5% added lactose (w/v) on SH groups (denaturation degree).

Fig. 5. depicts the effect of heat treatment of (WPI) (10% protein) with 5% added lactose (w/v) on glycation degree.

Fig. 6. shows the correlation between nephelometric turbidity measurements, particle size measured by laser diffraction analysis, and turbidity measured by UV/Vis spectrophotometry.

Fig. 7. shows the Free SH groups and Total SH groups as whey protein is heated in the presence of lactose.

Fig. 8. shows a plot to determine the maximum denaturation temperature.

Fig. 9. shows a plot of a standard curve for % denaturation.

Fig. 10. shows effect of heating temperature and rate on glycation.

Fig. 11. shows effect of heating at pH 8 on glycation.

Fig. 12. shows effect of heating at pH 6 on glycation.

Fig. 13. shows effect of protein concentration on glycation.

Fig. 14. shows effect of sugar concentration and total solids on glycation.

DETAILED DESCRIPTION

The present invention is concerned with an improved process for preparing modified protein-containing liquid mixtures, typically in the form of aqueous solutions, dispersions or suspensions. The invention arises from the recognition that, by taking into account the extent of glycation during heat-denaturing reactions, it is possible to provide products with further and/or tailored improved functional properties such as increased solubility, water-binding ability, acid stability and emulsifying ability. It is surprising that these improvements can be achieved in relatively short periods of thermal treatment of the liquid mixtures.

The process of the present invention relates to the reaction between proteins, e.g. globulin or globular proteins, and reducing sugar. Globulin and globular proteins are fairly soluble in aqueous solutions in contrast with fibrous proteins, which are virtually insoluble in water.

Both globulin and globular proteins have a fairly spherical structure induced by the protein's tertiary structure. Positioning of the protein's polar side-chains towards the outside of the structure (with hydrophobic side-chains pointing inwards) permits dipole-dipole interactions with aqueous media, explaining the solubility of these proteins in water.

Thus the protein may be a serum protein, such as globulin or albumin, albumin being an example of a globular protein. Whilst the origin of the protein is not of any particular importance to the practise of the invention, the invention is particularly useful for use in the modification of proteins found in products used in the food and drink industries that may be eaten or drunk. Thus the invention may be practised, for example, upon liquid materials comprising soy (sometimes referred to as soya), pea, bean, barley or wheat (or other seed) proteins, or egg protein (including egg white or whole egg), in addition to the protein found in whey.

Where the liquid material comprises protein other than whey (or milk proteins), this is typically produced by dissolving or otherwise mixing the protein containing fractions from plant seeds, beans or grains, (such as soy, pea, beans (e.g. jatropha beans), wheat, barley and the like).

It is to be noted that, whilst the invention is frequently described herein with reference to whey and whey proteins, this being a particularly useful embodiment of the invention, the present invention is not to be considered to be so limited.

Where the liquid material comprises, or is, whey, this may make use of wheys directly produced during cheese or casein manufacture, e.g. acid or sweet wheys. Alternatively the liquid mixture may comprise one or more of the following: whey protein isolate (WPI), whey protein concentrate (WPC), milk protein concentrate (MPC), milk protein isolate (MPI) and skim and whole milk.

As is known to those in the art, whey and milk protein isolates and concentrates are dry products resultant from concentration of the protein components of whey and milk, which comprise very little if any of the lactose found naturally. Whey and milk protein concentrates comprise proteins in concentrations in excess of those found naturally in whey and milk. For example WPI typically comprises 90-95 % protein and WPC typically comprises 30-80 % protein.

The process also involves the presence of a reducing sugar. The term reducing sugar is a well-understood term of the art referring to any sugar-contain molecule in which the anomeric carbon atom is not locked, for example as it is in the case when the glycosidic hydroxyl group participates in the formation of a glycosidic linkage, and so may be present in both open chain or ring structures with these two structures existing in equilibrium. In other words, any sugar, oligosaccharide or polysaccharide (or oligosaccharide- or polysaccharide-containing molecules) that contains a hemiacetal may be regarded as a reducing sugar in accordance with the present invention. Typical classes of reducing sugar are mono-, di- and other oligosaccharides. Typical reducing sugars include lactose, glucose, galactose, maltose, fructose, or derivatives of such reducing sugars, such as glucose-6-phosphate or gluconic acid (or polymers of any such reducing sugars, e.g. starch comprising reaction functionality capable of participating in Maillard reactions).

The reducing sugar may be present naturally along with the protein in a liquid, such as milk or whey, which may thus be submitted directly to the process of this invention. Alternatively, additional reducing sugar (or one or more additional reducing sugars) may be added to a protein-containing liquid material so as to increase the quantity of reducing sugar present and available to glycate the protein. If it is desired to reduce the quantity of reducing sugar present in whey (or other liquid material) prior to practise of the process of the invention, removal may be achieved by methods known in the art such as ultrafiltration.

Thus the relative amounts of protein and reducing sugar present in the liquid material may be manipulated so as to provide desired ratios. Typically the ratio of protein to reducing sugar will be about 1 g of protein to from 0.05 to 100g of reducing sugar (such as about 1g of protein to about 0.05 to 10g of reducing sugar or 1g of protein to about 0.05 to 0.7g reducing sugar).

The degree of glycation of the protein is generally such that the free amino groups are reduced by from 2 to 100%, compared with the native protein, the free amino groups being determined for the native protein and the glycated and denatured protein by treatment with an agent capable of dissociating any aggregated protein, contacting with 2,4,6-trinitrobenzenesulfonic acid (TNBS) and a borate salt, and measuring the absorbance resultant from said contacting; the free amino groups being calculated as [(absorbance measured for native protein MINUS absorbance measured for glycated and denatured protein) / absorbance measured for native protein] x 100. In some embodiments, a wider range of degree of glycation is contemplated, such as from 0.05 to 100%, or from 0.5 to 100%, or from 1 to 100%. In some embodiments, for example, the degree of glycation, determined as just defined, can be in the range of from 0.5 to 60% or from 1% to 50%. For some applications the range of 1-30% is preferred and for other applications 30-50% is preferred. The measurement of the degree of glycation is discussed further in more detail hereinafter.

Where it is desired to produce products comprising whey proteins, the liquid material submitted to the process of this invention is typically liquid whey (i.e. as opposed to a dried whey), although dried protein-containing products may be used to prepare the liquid material used in the process of this invention, e.g. by mixing with water and optionally (additional) reducing sugar. With liquid wheys, and other protein-containing liquid materials described herein, the protein concentration of the liquid materials may, for example, be from about 0.1 to 28% w/v, typically in the range of about 1% to about 28% w/v. Such liquids and materials typically comprise from 1% to 30% total solids. More generally, however, the liquid materials subjected to the process of the present invention typically have a total solids (TS) content in the range from 0.5 to 40% w/v, such as from 10 to 30% w/v. Alternatively the total solids content may be from 1 to 65% w/v, for example from 20 to 50% w/v.

The process of the present invention is particularly characterised in that the degree of glycation of the protein in the protein-containing liquid material is controlled. By control is meant herein that the temperature and/or duration of heating (also referred to herein as heat treatment intensity), and other reaction conditions, may be varied in response to a determination of the degree of glycation of protein during said heating. In addition to heat treatment intensity, for example, the pH of the liquid material that is heated may be varied.

Typically the heating is carried out at approximately neutral pH, preferably in the range of from 5 to 9, e.g. about 6 to 8. Typically, the process is conducted at a pH above 7.

Determination of the extent of glycation may be determined by any method known by those skilled in the art. In particular, the extent of glycation may be determined by monitoring the decrease in the amount of free amino groups (since these diminish during the course of glycation of the protein). Other examples of ways in which the degree of glycation may be determined include analysis by mass spectrometry or by monitoring the production of furosine.

In a particular embodiment of the present invention, determination of the extent of glycation is made by monitoring the absorbance resultant from the reaction between free amino groups and 2,4,6-trinitrobenzenesulfonic acid in accordance with the method taught by S.L. Snyder and P. Z. Sobocin (Analytical Biochemistry, 64, 284-288 (1975)) wherein that method is modified by the addition of an agent capable of dissociating aggregated protein found in the heated liquid material. Modification of the method of Snyder and Sobocin in this way offers a particularly advantageous method for quantifying the presence of amine groups in, and thus monitoring the degree of glycation of, protein-containing materials, that comprise aggregated proteins, which could be a consequence of denaturation, and is particularly advantageous in facilitating determination of the extent of glycation in near real-time and thus at-line. Accordingly, this method of determining glycation forms a further aspect of the present invention.

Viewed from this aspect the invention provides a method for the quantification of free amino groups present in a liquid material comprising aggregated protein said method comprising contacting said liquid material with 2,4,6-trinitrobenzenesulfonic acid (TNBS), a borate salt and an agent capable of dissociating said aggregated protein and measuring the absorbance resultant from said contacting.

In an embodiment, the invention provides a method for the quantification of free amino groups present in a liquid material comprising aggregated protein, said method comprising treatment of said liquid material with an agent capable of dissociating said aggregated protein, contacting with 2,4,6-trinitrobenzenesulfonic acid (TNBS) and a borate salt, and measuring the absorbance resultant from said contacting.

Typically, the agent capable of dissociating aggregated protein is urea.

The reaction that occurs between the reducing sugars and proteins present in the liquid material of the invention generally proceeds more quickly at higher pHs. Thus, control of pH in particular is one way in which the conditions during heating of the liquid material may be varied to discriminate between the extent of denaturation and glycation. Other factors that influence glycation are the type and concentration of reducing sugar. Glucose, for instance, results in increased glycation as compared to lactose. Furthermore, 20% lactose will result in higher glycation degree than 5% lactose.

According to the present invention, the proteins in wheys, whey-derived or other liquid materials, may be denatured by between about 1 to 100%, e.g. from 50 to 100%. More usually the proteins are denatured by 55 to 90%, typically from 60 to 80%. Desirably the proteins are denatured by at least 70%.

In some embodiments of the present invention, the degree of denaturation as determined by the increase in free sulfhydryl groups is greater than 2%, or greater than 5%, the free sulfhydryl groups being measured for the native protein and the glycated and denatured protein by contacting with 5, 5'-dithiobis(2-nitrobenzoic acid), and measuring the absorbance resultant from said contacting; the total sulfhydryl groups being measured for the native protein by treatment of the protein with chemical denaturants such as sodium dodecyl sulfate (SDS) and urea, contacting with 5, 5'-dithiobis(2-nitrobenzoic acid), and measuring the absorbance resultant from said contacting; and the increase in free sulfhydryl groups being calculated as [(absorbance measured for glycated and denatured protein MINUS absorbance measured for native protein) / (absorbance measured for total sulfhydryl groups of native protein)] x 100. For example, the degree of denaturation, determined as just defined, can be in the range of from 20 to 100%. For some applications the range of 20-50% denaturation is preferred and for other applications 50-100% denaturation is preferred. The measurement of the degree of denaturation is discussed further in more detail hereinafter.

Determination of the degree of denaturation, for the performance of monitoring denaturation, may be in accordance with any convenient method, for example, the methods described by N. Kitabatake and E. Doi in Journal of Agriculture and Food Chemistry, 1987, 35(6), 953-957; and by K. Shimada and J.C. Cheftel in Journal of Agriculture and Food Chemistry, 1988, 36(1), 147-153). Where percentages of denaturation are referred to herein, however, these are obtained by measurement of SH-groups in accordance with the method of K. Shimada and J.C. Cheftel, in Journal of Agriculture and Food Chemistry, 1989, 37(1), 161-168.

Free SH groups are described as the SH groups on the surface of native protein and the total SH groups are described as the sum of free SH groups as well as SH groups inside the sphere that are exposed by heat or buffer containing denaturants such as urea and SDS. This means that the number of free SH groups increases as proteins unfold during heat-induced denaturation, while the total SH groups remains constant. On the other hand, the number of free as well as total SH groups will decrease if covalent disulfide bonds are formed during gelation.

Indicative ranges for degree of denaturation, degree of glycation and Total Solids (TS) that can be used in the processes of the present invention and to produce the glycated and denatured proteins of the present invention have been given above, and further details are given hereinafter. However, it will be appreciated that the person skilled in the art will be able to suitably manipulate these parameters, as taught herein, to obtain the functionality desired for a particular application. Measurement of glycation, measurement of denaturation, and functional testing are discussed further hereinafter.

As indicative ranges, however, it has been observed that 3-50% denaturation, 10%-30% glycation may lead to good emulsification properties and could be used, for example, in applications such as stabilization of beverage emulsions to replace gum Arabic; or as an emulsifier in baking that dispenses with the requirement for further emulsifier. This combination can also lead to excellent foaming ability and stability and this may be applicable to foamed desserts, mousses and baking.

As a further indicative range, it has been observed that 50-100% denaturation, 30%-50% glycation may result in creating viscosity in emulsions, thereby reducing fat and replacing added gums such as carrageenan.

Increase in total solids will increase the degree of glycation and can be used to increase glycation relative to denaturation. It is sometimes preferable to work in a range of 20-50% TS.

In one embodiment the denatured whey or other products produced according to the process of this invention comprise protein-containing products of the type described in WO02/49442.

Also present in the final product may be various animal or vegetable oils or suitable for use in food products, including, for example, sunflower oil, olive oil, soya oil, liquefied butterfat, rape seed oil, etc or minerals naturally found in the protein-containing liquid materials such as whey. One or more salts (e.g. sodium chloride) may also be present).

Where it is desired to produce denatured products (e.g. whey-derived) having a protein content of more than 40 wt%, in accordance with the teachings of WO02/49442 or otherwise, the (large) amount of lactose naturally found in liquid whey (about 5% w/v) is reduced, normally prior to heat-treatment. Thus, in these embodiments, the resultant denatured whey products may comprise from 0.1 to 59 wt% lactose, e.g. 1 to 50 wt% lactose, more typically 2 to 30% lactose, for example 5 to 20% lactose on a TS based on the dried denatured whey powder. Generally lactose will be the only reducing sugar present in whey, that is to say the reducing sugar component in the whey typically consists essentially of lactose.

We have found that suitable amounts of denaturation can be safely obtained by means of a thermal treatment step in which the liquids are heated to a temperature of 55 to 95 °C, e.g. 65 to 80 °C or 55 to 70 °C. It will be appreciated that with higher temperatures there should generally be used a shorter treatment period. Suitable treatment times would typically be from 1 to 10 minutes at from 70 to 80 °C, and from 10 to 30 minutes at lower temperatures. However, it will be appreciated that the appropriate treatment time and duration (also referred to herein as heat treatment intensity) will depend upon a range of factors. These include not only the protein and its concentration and the reducing sugar and its concentration, but also the extent of glycation and denaturation that is desired. Consequentially processing times may vary from as little as 1 minute to as much as 24 hours or more. The most appropriate conditions for a given process may be readily determined by the skilled person.

In our pending International patent application number PCT/GB2007/003420 we describe how an effective, more or less real-time, control of suitable heat treatment processes may be achieved and this can be carried out in conjunction with the process of the present invention. It may be practised with liquid materials comprising proteins present in relatively dilute concentrations (0.1-10% w/v; 0.5-10% w/v; or 5-10% w/v) as well as at more concentrated protein-containing materials, which may typically contain of the order of 15 to 28% w/v protein, which is generally equivalent to 20-30% w/v TS depending on the particular source or type of the protein material. With concentrated materials, it was not possible previously to obtain accurate turbidity measurements, and it was necessary to dilute substantially the sample material in order to enable sufficiently accurate turbidity measurements to be obtained to provide practically useful indications of the level of aggregation and aggregate particle size, before attempting to measure the turbidity. However, such dilution results in substantial changes in pH and ionic strength, which can considerably affect the behaviour of the protein molecules and change the aggregation thereof, thereby resulting in substantial distortion of any turbidity measurements. Another problem with turbidity measurements in such cases is that even relatively small aggregates may precipitate (especially a substantially diluted solution) so quickly that it is not possible to capture an accurate and meaningful turbidity measurement.

Thus in particular embodiments of the invention, the process further comprises one or more additional controls to determine the turbidity of the heat-treated protein containing liquid material, which can be correlated well with the size of the aggregates formed by the denatured protein molecules; and/or the measurement of the degree of denaturation of the proteins. In this way, products comprising aggregates of desired size and functionality, as well as a desired degree of glycation, can be manufactured from protein containing liquid materials (including liquid whey streams with protein concentrations of up to 28% w/v or up to 30% TS), with high reliability and reproducibility. This enhances still further effective quality control during commercial processing.

Thus, the heating of the protein-containing liquid material according to the present invention is preferably subject to further control so as to produce heat-denatured protein aggregates of desired particle size and functionality whereby to:

heat the liquid material to a temperature corresponding to a heat treatment intensity in proximity to a previously established expected heat treatment intensity;
collecting a sample of the heated protein-containing liquid material;
diluting said collected sample in a buffer formulated so that the pH in said sample is substantially unchanged, the ionic conditions in said sample are substantially unchanged, and the viscosity of said sample is at least substantially maintained, all relative to the undiluted sample;
measuring the turbidity of said diluted sample relative to an untreated control sample;
comparing the turbidity measurement obtained with previously established turbidity measurement limits corresponding to a desired average protein aggregate size range; and/or
mixing said collected sample with a chemical -SH group reaction measurement system;
comparing the SH-group measurement obtained with previously established SH-group measurement limits corresponding to a desired degree of denaturation; and
in the event of any deviations from the desired particle size and/or degree of denaturation, adjusting the heat treatment intensity so as to conform these to the desired value(s).

Control over the process of the present invention may be undertaken in relation to one or more of establishing of this for a process for a new product, or for a process for an existing product when a new batch of liquid material is used, and/or for monitoring a process in the course of a single production run in case there might be any unexpected deviations for any reason, in the process conditions or parameters, in order that, for example, deviation from an anticipated degree of glycation can be detected, or the heat treatment intensity can be adjusted so as to counteract such deviations.

In the case where the method is used to establish heat treatment intensity, then the liquid material would initially be heated to a temperature (preferably at a small offset) below a previously established expected heat treatment intensity, and the method would include the steps of:

incrementing the heat treatment intensity, and repeating the preceding steps for each heat treatment intensity increment; and
discontinuing said heat treatment intensity incrementation when said comparisons indicate that the established turbidity measurement limit and/or established SH-group measurement limit is being approached. Typically this offset would be such that the liquid material is heated to about 5 °C below a previously established heat treatment intensity, e.g. heated to below about 3 °C, or 2 °C below a previously established heat treatment intensity, and the heat treatment intensity increased so as to increase, or decrease, the temperature of the liquid material in increments of about 0.5 to 1 °C until both denaturation degree and turbidity measurements are within the desired range.

When the method is used for monitoring a process during the course of running thereof, then the liquid material is typically heated to a temperature in substantially direct proximity to a previously established heat treatment intensity.

With a process as just described, it is typically possible to collect and process a sample, within less than 5 minutes, for example, less than 2 minutes preferably less than one minute, e.g. less than 30 seconds, thereby permitting a rapid detection of the degree of glycation and the level of protein aggregation and protein aggregate size, and degree of denaturation. This allows the heat treatment intensity to be incremented relatively rapidly towards the intensity required for obtaining a product with the desired degree of denaturation, and a desired average protein aggregate size range, thereby minimizing waste of sub-optimal product, whilst providing rapid advance warning of close approach to a heat treatment intensity which would result in gelation of the liquid material or excessive aggregation and precipitation, which can result in more or less severe processing plant disruption. Moreover, the above-described measurements can readily be made with the use of relatively simple processing and compact instrumentation, which can be readily integrated into a production plant environment.

The present invention considerably facilitates the heat treatment of liquid materials having concentrations of proteins in excess of 15% w/v which is, from an economic point of view, significantly more advantageous than heat treatment of materials having protein concentrations below 15% w/v, but is often avoided in practice because of the significant risks of disruption of the production process and plant associated therewith.

In relation to the controlling of the heat treatment intensity in heat treatment processes, it will of course be appreciated that the effective heat treatment intensity can be changed in various different ways including *inter alia* adjustment of the energy input to the heater, suitable modulation of any heat exchange or heat transfer system used to transfer heat from the heater to the liquid material, and changing the duration of the heat treatment (via adjustment of the flow rate of the liquid material through the heat treatment zone in the case of a continuous flow process). In certain embodiments of the invention heat treatment is effected by steam injection. Typically, by steam injection, the maximum temperature of heat treatment of the aqueous phase is up to 200 °C.

It will be appreciated that the degree of glycation, denaturation, and protein aggregate size range, will also be affected by different forms of heat treatment intensity change. Thus whilst it will generally be more convenient to use a generally constant period (corresponding to a constant liquid material flow rate in a continuous flow process), the processes taught herein can also be used where the heat treatment temperature is kept substantially constant, and the heat treatment period is progressively incremented towards the required operating level.

It will likewise be understood that whilst the process of the present invention is especially convenient for use in controlling continuous flow production processes, it can also be useful in setting up batch production processes.

In relation to the measurement of the degree of denaturation in accordance with certain embodiments of the present invention, it is important to measure the amount of -SH groups that are actually reactive i.e. available for chemical reaction, which requires the use of a chemical reaction system wherein the level of reactive groups is indicated by the extent of reaction with the chemical reaction system, which can be readily measured e.g. by means of spectrophotometric measurements. One such suitable chemical -SH group reaction measurement system has been described by Shimada, K., Cheftel, J. C. (1989) (J. Agr. Food Chem., Vol 37, page 161-168). In the case of the chemical reaction system 5,5'-dithiobis-(2-nitrobenzoic acid) it should be noted that this compound after reacting with SH groups has a wide range of absorbance spanning between 390 and 500 nm with maximum absorbance at 412 nm, which can shift between 409 and 420 nm depending on chemicals in the buffers such as NaOH, EDTA or urea (Sigma product information sheet D8130. Depending upon available equipment absorbance can therefore be measured at, for example 412 nm, as reported by Shimada and Cheftel, or at 420 nm, as is reported in some of the procedures herein. In the case of this system it may be noted that a protein concentration of 0.5-1 g/50 ml gives a linear range of absorption reading at 420 nm, and it is therefore desirable that when this chemical reaction system is added to the sample, the protein concentration in the resulting mixture should be of the order of 1 to 2% w/v. Depending on the protein concentration in the original sample, this may require a greater or lesser degree of dilution. This can be conveniently achieved by formulating the chemical reaction system which is added so that when it is mixed with the sample, the protein concentration is effectively diluted to the desired concentration. Nevertheless it would also be possible to use a separate dilution solution.

It will be understood that whilst various heat treatment denatured protein products will generally have a desired degree of denaturation corresponding to a reactive -SH group level of the order of 50 to 100 % (relative to a non-thermally denatured control sample, which represents 0% denaturation and relative to a fully (100%) denatured protein control in which all the buried SH groups are exposed, prior to the onset of gelation), different heat treatment denatured protein products may have a significantly greater variation in desired protein aggregate size range. This may in turn affect the degree of sample dilution required in order to obtain sufficiently accurate turbidity level measurements. In general, a degree of dilution should be used such that the turbidity levels corresponding to the desired average protein aggregate size range, should not exceed 10000 NTU (nephelometric turbidity units), preferably not more than 6000 NTU. It will be appreciated that the turbidity levels obtained will depend to a significant extent on the protein concentration in the liquid mixture and that accordingly, the degree of dilution required will also generally be related to the original protein concentration, and accordingly could also be related to a desired protein concentration level in the diluted material. Typically this would be less than 1% w/v, preferably not less than 0.1% w/v, desirably in the range from 0.2 to 0.6% w/v. In practice this would generally involve the use of dilutions of the order of from 10 to 100 times for 15-30% TS whey, and 0 to 10 times for 5 to 15% TS whey (5 to 15% TS whey typically has a protein concentration of about 50 to 90 %).

Various protein-compatible buffers are well known in the art for maintaining pH and ionic strength. Preferably the buffer does not give rise to a pH change of more than about $\pm$ 0.5, e.g. less than about $\pm$ 0.3. With regard to the ionic conditions, these preferably remain relatively constant upon addition of the buffer, for example vary less than about $\pm$ 0.1 micromolar, e.g. less than about $\pm$ 0.05 micromolar.

In relation to viscosity, it will be understood that particle sedimentation rate increases significantly with increased aggregate particle size whereby a substantial proportion of the particles may be removed from the sample before the turbidity measurement can be completed, thereby adversely affecting the validity of the measurement. Accordingly, it will generally be necessary to control the viscosity of the sample to a greater or lesser degree, and more particularly, so that the sedimentation time of the largest size aggregate particles expected in the process conditions of interest, should not be less than 1 minute, preferably not less than 5 minutes. Generally the viscosity of the diluted sample is within about $\pm$0.5 cP of the undiluted sample, e.g. within about 0.3 cP. Suitable viscosity conditions may be readily determined as will now be explained with reference to a largest aggregate particle size of 100 $\mu$m.

Formulae used to calculate sedimentation of particles are based on Stoke's law which is formulated to determine the size of spherical particles by measuring the time required for the particles to settle a known distance in fluid of known viscosity and density. One formula used to calculate the distance that particles with size ranging from 0.1-100 $\mu$m would travel is as follows:

$$d = 18 \; \eta_c \; h/(\rho1- \; \rho2)gt$$

(where:

h = displacement (cm)
t = time (s)
g = gravitational constant
$\rho1 - \rho2$ = differential density between dispersed particles and the liquid (g/cm$^{-3}$)
d = diameter of particle ($\mu$m)
$\eta_c$ = viscosity of continuous phase (poise)).

Another formula used to calculate the distance that particles with size ranging from 0.1-100 $\mu$m would travel is as follows:

$$v_s = [d^2(\rho_s - \rho_0)g] \; / \; [18 \; \eta_0]$$

(where:

$v_s$ is the settling velocity in cm/s
d = particle diameter = 100 $\mu$m. (100 x 10$^{-4}$ cm)
$\eta_0$ = viscosity of 10% sucrose solution = 1.167 cP
$\rho_0$ = density of 10% sucrose solution = 1.036 g/cm$^3$
$\rho_s$ = density of whey protein particles = 1.050 g/cm$^3$).

Various materials may be used in the dilution buffer to increase the viscosity of the diluted sample to a suitable level, without significantly affecting the protein aggregates (other than affecting their sedimentation rate). Suitable materials include sugars, for example, sucrose, lactose, or glucose. In the case of sucrose, a suitable concentration for use in carrying out turbidimetric measurements on samples containing protein aggregate particles having a size less than 50 $\mu$m, would generally be of the order of from 5 to 20 % w/v, preferably from 5 to 10 % w/v.

Using the second formula above a 100 $\mu$m particle in a 10% sucrose solution would be estimated to sediment at a rate of 0.003924 cm in 1 minute.

In practice, the method of measuring turbidity generally involves a preliminary calibration step to provide said previously established turbidity measurement limits corresponding to the desired average protein aggregate size range, and said previously established SH-group measurement limits corresponding to the desired degree of denaturation using a heat treatment processing of a representative sample of the liquid material to be processed. Normally such a calibration step would be carried out using a laboratory scale heat treatment processing of the liquid, with turbidity and reactive -SH group measurements being obtained across an extended range of progressively incrementing heat treatment intensities, as well as (direct) particle size measurements being obtained across said range. The particle size measurements may be obtained by any suitable method known in the art. In practice these tend to be relatively cumbersome and time-consuming - and thus generally unsuitable for use directly in a commercial production process. These drawbacks can, though, be tolerated in a laboratory scale calibration procedure. One convenient technique which can be mentioned in this connection, is laser diffraction analysis, which is based on different degrees of diffraction associated with different particle sizes, and is well known for the measurement of particle size of *inter alia,* protein particles in solution, with suitable instruments being readily available commercially.

Where more or less highly accurate turbidity measurements are obtained, in particular nephelometric turbidity measurements, a substantially linear relationship is found between average particle size, where "average" means that 50% (by volume) of a population of particles is below the given diameter, and the turbidity measurement level, whereby a good indication of the protein aggregate particle size can be obtained quickly and easily from a relatively simple turbidity measurement, in particular a nephelometric turbidity measurement without the need to carry out relatively cumbersome and time-consuming direct measurements of the particle size.

By extending said range into a region of progressively incrementing heat treatment intensities in which gelation and/or excessive aggregation takes place - which would be quite unacceptable in a production process, it is possible to identify turbidity and reactive -SH group measurement levels, which are associated with heat treatment intensities in close proximity to heat treatment intensities at which gelation and/or excessive aggregation takes place, thereby providing advance warning of these.

It will be appreciated that the range of desired particle size and functionality properties, can vary according to the requirements of the user of the protein aggregate product. In general, desired particle sizes (volume median diameter D(v,0.5) as measured by laser diffraction analysis) may be in the region of from 0.05 to 50 μm. Also the sensitivity of the aggregation process to changes in heat treatment intensity can vary significantly from one liquid material to another. By way of illustration it may be noted that, in the case of a heat denatured whey protein aggregate product intended for use as a sodium caseinate replacement, this would desirably have a particle size range such that at least 50% of the particles (by volume) have a particle size of from 0.1 to 50 μm. (In more detail a particle size range of 0.1-1 μm would be useful for sodium caseinate replacement, in acidic drinks such as fruit drinks (e.g. smoothies), and fat replacement in pasteurised skim milk; a particle size range of 1-10 μm for sodium caseinate replacement, fat replacement in yoghurts, viscosity increase in health drinks, texturisation in health bars; and a particle size range of 10-50 μm for sodium caseinate replacement, fat replacement in mayonnaises, as a gelling agent in acidic desserts and in cold meat analogues, and for texturisation in health bars.)

When using a protein concentration of 20% w/v with a pH of 7, at a flow rate of 1000 litres/hour and a heat treatment time of 1 minute, the temperature will generally be within the range of from 68 to 72°C. In view of the fact that the onset of gelation of such a liquid material would generally occur at about 74°C, it can be seen that there is only a margin of about 2°C between the upper limit of the desired operating temperature and the onset of gelation. In this case a suitable temperature incrementation interval would generally be from 1 to 2°C, conveniently about 1°C.

Thus the liquid material typically has a pH in the range 6 to 9 and a protein concentration of up to 20% protein w/w; and the heating is at a heat treatment intensity set with the aid of a controlling method as described in herein in which the heat treatment intensity is progressively incremented until denaturation degree and turbidity measurements are within a desired range corresponding to the desired functionality and particle size.

Monitoring of the degree of glycation, and optionally protein denaturation and aggregation, during the course of a heat treatment process, can be carried out as often as is desired, for example every 1 to 10 minutes, but in practice we have found that it is generally sufficient to do this at intervals of the order of 1 to 4 hours.

After practice of the process of the invention the protein component in the resultant product may be optionally be concentrated, e.g. removing excess sugar by a process such as ultrafiltration. Additionally, the product, concentrated or not, can be dried, e.g. by spray-drying. When the product of the process is dried this may be achieved by using an atomising type spray-dryer, preferably so as to give a particle size of the order of 50 to 200 microns, or for example 0.5 to 30 microns e.g. 15 to 30 microns. Further details are provided in WO02/49442. Alternatively, drying to provide the dry powders may be by other conventional spray-drying, evaporation or lyophilisation.

As liquid materials with solids contents generally in the range from 15 to 35% w/v can be readily spray-dried, the solids content of typical liquid materials used to prepare the dried denatured protein-containing powders used according to the present invention will often be suitable for spray-drying, if desired, without the need for any prior adjustment of the water content.

In one embodiment the reaction is terminated at the required degree of glycation, denaturation and particle size and by immediate cooling to a temperature of 55 °C or below, more usually 20 °C or below. The cooling may be by any known method in the art typically making use of a heat-exchanger (we find plate heat-exchangers to be useful) using cold water as coolant. After cooling, the resultant product may be concentrated, e.g. by ultrafiltration and optionally spray-dried to a water activity of less than 0.2.

The process of the invention thus allows the production of the protein-containing products having enhanced functional properties on a commercially viable scale. These functional properties may include enhanced solubility, heat stability, emulsifying activity, water holding ability, cold gelling ability, heat-induced gelling ability, increased viscosity and enhanced acid stability.

The protein-containing products of the invention wherein the protein present has been partially denatured and glycated to a desired level according to the process of the invention may be used as sodium caseinate replacement in meat products, where heat-induced gelling is important. They may also be used as emulsifier in mayonnaises and low fat salad dressings where the improved emulsification properties are of particular use. The improved water binding and viscosity lending properties have a wide range of applications as fat replacement in low and medium fat-containing products such as cheese, yoghurts, sauces and dressings. Acidic stability facilitates incorporation of products of this invention into acidic fruit containing beverages such as smoothies and yoghurt drinks.

As disclosed above, it is convenient in the process of the present invention to monitor the progress of the glycation and denaturation by one or more measurements. The time taken to perform these measurements can vary. Therefore, according to an aspect of the present invention, the controlling of the process, or the controlling of glycation of the said protein, can include the use of one or more measurements as surrogate for one or more other measurements.

Thus, in the laboratory, or in pilot plant runs, the process can be conducted in a controlled manner, and a number of measurements can be used to characterise the progress of the glycation and denaturation reaction. The results of these measurements can be correlated with one or more measurements that can be conducted at line or in line in real time or close to real time.

As used herein, "at line" means a measurement conducted in the operating plant where the glycated and denatured protein is being produced, in proximity to the production line. It will generally be close to real time.

As used herein, "in line" means a measurement conducted in the operating plant where the glycated and denatured protein is being produced, which is integrated into the production line. The measurement will then necessarily be close to real time.

Based on current technology, the fastest measurement is the turbidity measurement, and therefore this is particularly suited to be such a surrogate measurement. Other measurements that can be conducted quickly and therefore are suitable as surrogate measurement are the measurement of free -SH groups by colorimetric means and the measurement of free amino groups by colorimetric means. As disclosed above, these two measurements relate to the degree of denaturation and the degree of glycation respectively.

When the process is being run in order to calibrate the surrogate measurement(s) against the other measurements, it will be convenient to perform the reaction on a relatively small scale, and measure turbidity, free SH groups, and free amino groups. It may be convenient to measure degree of glycation and/or denaturation by one or more other means that are discussed herein.

For example, the following methods of determining the degree of glycation of the protein may be useful in calibrating the surrogate measurements, namely:

1) determination of primary stage glycation products by spectrophotometric absorbance at 305nm;
2) determination of intermediate stage glycation products by fluorescence measurements at emission and excitation wavelengths of 415nm and 347nm, respectively, or by determination of furosine by high pressure liquid chromatography;
3) determination of advanced staged glycation products by spectrophotometric absorbance at 420nm
4) determination of reaction products of all stages of Maillard reaction by:

(i) Determination of free amino groups by reaction with orthophthaldialdehyde (OPA): Free amino groups are reacted with OPA in the presence of 2- mercapto-ethanol and SDS and absorbance is measured at 340nm.
ii) LC-MS (liquid chromatography linked to mass spectrometry) is a useful tool in determining glycation sites, since different patterns of hydrolysis can be obtained for glycated and nonglycated samples, followed by mass determination of the hydrolysed peptides.
iii) SDS-PAGE (sodium dodecyl sulfate polyacrylamide electrophoresis): Important differences in migration patterns of glycated proteins can be observed in SDS/PAGE, a technique that separates proteins according to electrophoretic mobility in a gel.

For example, the following methods of determining the degree of denaturation of the protein may be useful in calibrating the surrogate measurements, namely:

1) increase in protein hydrophobicity;
2) decrease in soluble nitrogen, usually at pH 4.6 - First the denatured protein is precipitated by adding acid to pH 4.6 followed by filtration or centrifugation. The filtrate or supernatant is analysed for protein content by a chemical method (Bradfort or Kjeldahl) followed by analysis by reverse phase HPLC chromatography. The degree of denaturation is calculated via the ratio of peak areas of the heat-treated and non-heated sample.
3) differential scanning calorimetry;
4) circular dichroism;
5) gel permeation chromatography;
6) UV/Vis spectrophotometry (absorbance at 500-600nm); and
7) gel electrophoresis.

It may also be convenient to calibrate the nephelometric turbidity measurement (measured, for example, as is preferred herein, with a Ratio White Light Nephelometer) against particle size measurements obtained by laser diffraction methods, for example using Malvern Mastersizer and Zetasizer equipment (which are less suitable for at-line use because of the greater time taken for these measurements).

It may further be convenient to measure one or more properties of the protein conjugate that are relevant to the functional properties.

These methods will now be described in more detail.

**Turbidity Measurements**

Aggregation of proteins is an unavoidable consequence of denaturation and is influenced by factors such as pH, ionic strength and presence of ions such as calcium as well as the type and concentration of sugars present in the solution. It is therefore important to make use of methods that can measure particle size in real time to control manufacture of soluble protein-aggregates/conjugates by thermal treatment of liquids.

As is disclosed herein, in order to measure the turbidity, it is necessary to dilute the sample in a buffer formulated so that the pH in said sample is substantially unchanged, the ionic conditions in said sample are substantially unchanged, and the viscosity of said sample is at least substantially maintained, all relative to the undiluted sample.

Dilution buffers can be formulated to suit the protein-reducing sugar mixture. Buffers were designed based on experience of behaviour of different types of proteins in different buffers. The formulation of buffers should aim to bring maximum stability of aggregates that would enable stable digital turbidity measurement of at least 1 minute. Ionic strength and pH of dilution buffer should be similar to conditions in conjugate reaction mixture. Viscosity is maintained by addition of sucrose so that the sum of reducing sugar in sample after dilution and sucrose is at least 5% in the final solution to be measured for turbidity. Examples of suitable dilution buffers are as follows:
The following buffer has been found suitable for whey and egg solutions:
5-10% sucrose, 0.1 M $Na_2HPO_4$, pH 9.

The following buffer has been found suitable for liquid whey protein samples:
10% w/v sucrose, 0.1 M $Na_2HPO_4$, 0.02 M Citric Acid, pH 6.5

The following buffer has been found suitable for protein + sugars/polysaccharides:
2% sucrose, 0.01M Citric Acid; 0.2 M $Na_2HPO_4$, pH 8

In general, there should be used a degree of dilution so that the turbidity levels should not exceed 10000 FNU (nephelometric turbidity units), preferably not more than 8000 FNU. As the turbidity levels obtained will depend on the protein concentration it would typically be less 1% w/v in the final solution. In practice this would generally involve the use of dilutions of the order of from 50 to 150 times for 15-30% TS whey, and 0 to 10 times for 5 to 15% TS whey (50-90% protein concentration).

For determination of particle size in general, suitable instruments are readily available commercially such as the Mastersizer and Zetasizer supplied by Malvern instruments. However, the duration of these measurements is usually > 15 minutes and not suitable for at-line or in-line measurements in real time. These measurements also give no indication of the degree of denaturation of proteins.

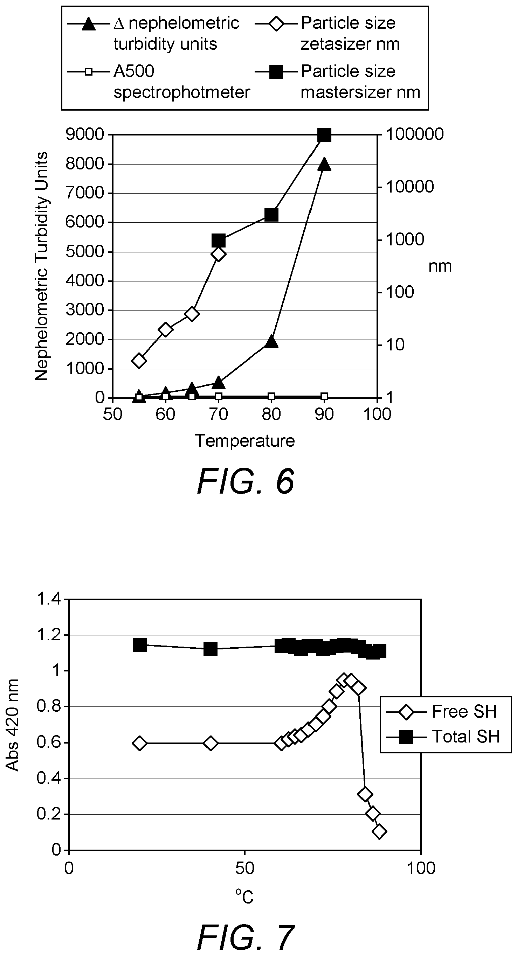

In practising the present invention, it has been found that nephelometric turbidity measurements using a Ratio White Light Nephelometer results in a close correlation between "average" particle size as measured by laser diffraction analysis, where "average" means that 50% (by volume) of a population of particles is below the given diameter. Figure 6 demonstrates the relation between turbidity of a heat-treated whole egg solution versus particle size measured by Malvern Zeta- and Master equipment and absorbance measured at 500nm with a spectrophotometer. Figure 6 demonstrates that measurements in nephelometric units correlate to particles in the nano- and micro-scale range as measured by the Zeta- and Mastersizer. Whereas the Zeta sizer is geared for measurements of nano- size particles and the Mastersizer measures particles in the micro-size range, the nephelometer has the ability to measure in both the nanometer and micrometer range.

**Theory of turbidity (light scattering)**: Particulate matter in a water sample will cause an incident light beam to be scattered randomly through a sample. The scattered light that returns to the detector causes a response correlating to the level of turbidity in the sample. A higher level of scattered light reaching the detector results in a higher turbidity value. The measurement of turbidity is not directly related to a specific number of particles or to a specific shape. As a result, turbidity has historically been seen as a qualitative measurement.

**A nephelometer** is an instrument for measuring suspended particulates in a liquid or gas colloid. It does so by employing a source (light) beam and a light detector set to one side (usually 90°) of the source beam. Particle density is then a function of the light reflected into the detector from the particles. To some extent, how much light reflects for a given density of particles is dependent upon properties of the particles such as their shape, color, and reflectivity. Therefore, establishing a working correlation between turbidity and suspended solids (a more useful, but typically more difficult quantification of particulates) must be established independently for each situation. A more popular term for this instrument in water quality testing is a turbidimeter. However, there can be differences between models of turbidimeters, depending upon the arrangement (geometry) of the source beam and the detector. A **nephelometric turbidimeter** always monitors light reflected off the particles and not attenuation due to cloudiness, which enables quantitative, reproducible and sensitive measurements.

The units for reporting turbidity (NTU) are commonly the same no matter which turbidimeter design is being used. However, depending on the interferences present, (especially in samples with high turbidity levels) the instrument design can have a dramatic effect on the reported result. For example, if a sample with a high level of turbidity is measured with a White Light non-ratio instrument, the results will be dramatically different from a reading obtained with a White Light ratio instrument.

An instrument that can used to practise the present invention is a Ratio White Light turbidity meter, which uses a nephelometric detector as primary detector, but contains other detectors to minimise interference. The optical system is comprised of a tungsten-filament lamp, lenses and apertures to focus the light, a 90-degree detector, forward scatter light detector and a transmitted light detector. The instrument permits turbidity measurements using only the 90 degree scattered light detector. It can also use the complete set of detectors (ratio). With Ratio on, the instrument's microprocessor calculates the ratio signals from each detector. The benefits from using Ratio on for measurements include excellent linearity and calibration stability.

As mentioned above, the readings obtained with the nephelometric turbidity meter can be correlated with laser diffraction particle size measurements, for example obtained with Malvern Mastersizer and Zetasizer equipment.

A suitable instrument is the Hach Model 2100AN laboratory turbidity meter for which the manual can be downloaded from: http://www.camlab.co.uk/originalimages/sitefiles/Hach_manua ls/2100ANmanual.pdf

**Measurements of Denaturation**

In order to provide effective control of the denaturation of globular proteins such as milk whey protein and egg protein, it is necessary to monitor the quantity of reactive -SH groups. This can be done at line, or it can be used to correlate with another measurement that is performed at line, e.g. nephelometric turbidity.

A convenient method to measure the percentage of denaturation is by measurement of free and total SH-groups in accordance with the method of K. Shimada and J.C. Cheftel, in Journal of Agriculture and Food Chemistry, 1989, 37(1), 161-168. It will often be useful to establish a standard curve for each new protein product, especially at varying total solids, protein concentration, pH and reducing sugar types and concentrations.

An example is given as follows: To calculate the % denaturation applicable to whey protein concentrate 60 (60% protein wt/wt and 30% lactose wt/wt) at 22% TS and pH 7, a standard curve was established by heating 500 ml solution in a water bath while stirring and taking 2 ml samples at increasing temperatures at 1 minute intervals and cooling the samples immediately on ice. 300 $\mu$l of protein sample was added to 10 ml "sulfhydryl buffer" (-SH group chemical reaction system) having the following composition 0.086M Tris, 4mM EDTA, 0.09M Glycine, 3 mM DTNB (5, 5'-dithiobis(2-nitrobenzoic acid)), pH 8. To determine the total free SH-groups, 300 $\mu$l of each heated treated sample was added to SH-buffer containing 6M urea and 0.5% SDS. The SDS and urea further denatures the protein by dissociating non-covalent hydrophobic bonds causing intra- and intermolecular protein interactions.

As can be seen in the Figure 7, the absorbance at 420 nm of free SH groups increases linearly from 63 to 80°C, but after 80°C there is a marked decrease in SH groups (duplicate measurements). The total SH groups remains constant and shows a decrease after 80°C. When the percentage of free SH relative to total SH at 80°C is calculated, a percentage denaturation of 82% is obtained. Under these experimental conditions, the maximum unfolding of free SH -groups occurs at 79° and 80 °C. At higher temperatures the free SH groups are masked by aggregation of the whey particles, which can only be revealed in the presence of SDS and urea.

The maximum % denaturation obtained based on the ratio of free SH/total SH will depend on the protein concentration and pH of the heat-treated solution. Protein concentrations < 10% at pH > 7 would be able to reach 100% denaturation, whereas at lower pH the denaturation degree will diminish as the pH approaches the iso-electric point. At protein concentration > 10% at pH > 7, the maximum denaturation degree will decrease as the protein concentration increases as the formation of disulfide bonds and hydrophobic bonds would be increased at higher protein concentration. As the pH decreases the maximum denaturation will decrease even more.

The measurement of sulfhydryl (SH) groups can generally be determined in a similar manner to that used to generate Figure 7. The reagents that can be used are as follows:

Free-SH buffer: 0.086 M Tris-0.09 M glycine-4 mM $Na_2$EDTA, pH 8.0

Total-SH buffer: 0.086 M Tris-0.09 M glycine-4 mM Na2EDTA, pH 8.0 containing 6 M urea and 0.5% SDS instead of 0.086 M Tris-0.09 M glycine-4 mM $Na_2$EDTA

Colour reagent: 20 mM DTNB (5, 5'-dithiobis(2-nitrobenzoic acid)) (DTNB is dissolved in above buffers).

A protein concentration of 0.1-1% gives a linear range of absorption reading at 420 nm, and it is therefore desirable that when the chemical reaction system is added to the sample, the protein concentration in the resulting mixture should be in the order of 0.1 to 1% w/v.

A convenient instrument is the Hach DR/890 colorimeter. This is a portable handheld instrument with a capability for measurement at 420nm, which is in the range for absorbance of DTNB.

The measurement is taken at 420 nm with 500$\mu$l of sample and 10ml of the SH buffer (Free SH or Total SH, as required, each containing the colour reagent).

A further method to set up the standard curve for determination of denaturation is now described. The maximum % denaturation (Increase in Free SH/Total SH x100) will be different for each type of protein-sugar combination and for each different protein concentration (total solids) in the reaction mixture.

Depending on the TS of the heated sample, the free SH might reach a maximum at a temperature lower than 95 °C from where the values decline, indicating formation of disulfide bonds (which is usually undesirable). This temperature at which the free SH starts to decline should be used as target temperature for setting up of the standard curve. The sample representing 100% denaturation should be prepared by reacting the native protein (preferably but not necessary at the same total solids as the heated sample) with 0.086 M Tris-0.09 M glycine-4 mM $Na_2EDTA$, pH 8.0 containing 6 M urea and 0.5% SDS.

a. Heat-treat 500 ml of reaction mixture to 95 °C in laboratory water-bath whilst stirring with a glass rod

b. Remove 2 ml sample at increasing temperature increments and put on ice (control sample is sample taken at 25°C)

c. Measure free SH as described above

d. Establish temperature at which maximum unfolding of free SH occurs

e. Repeat steps a-c with fresh 500 ml of reaction mixture heated to the maximum temperature established in previous steps (d)

f. Prepare a 50 ml solution of the native protein at preferably the same total solids as the heat- treated sample. Add 500 μl of this sample in 10 ml total SH-buffer containing 6M urea and 0.5% SDS and measure absorbance at 420nm. This serves as the standard for 100% denaturation (total exposure of SH-groups).

g. Plot the absorbance of test samples in free SH buffer taken at increasing temperatures as part of standard curve and add a linear trend-line.

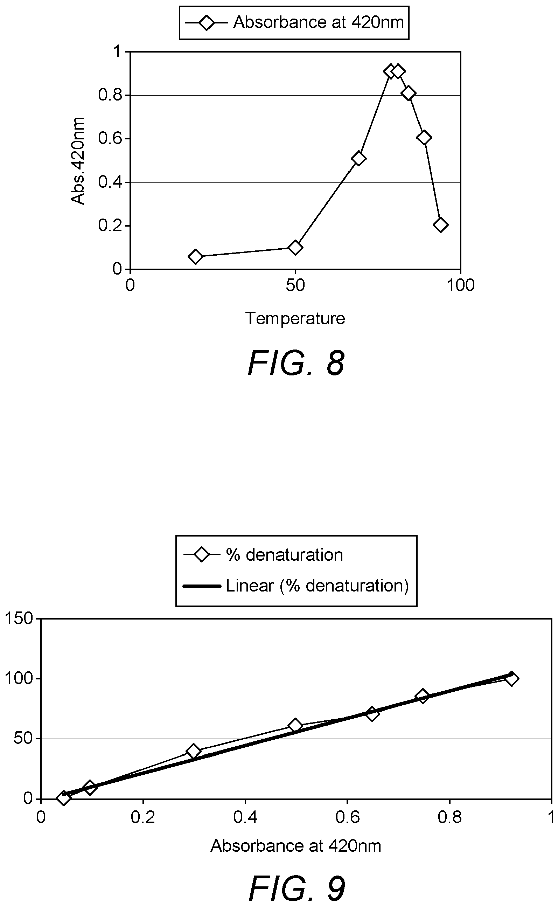

Sample plots of the maximum denaturation temperature and standard curve for % denaturation are shown in Figure 8 and Figure 9.

Other methods of determining degree of denaturation, discussed above, may be useful to correlate with or calibrate this measurement.

## Measurements of Glycation

The interaction of reducing sugars with proteins involves a myriad of naturally-occurring reactions collectively described as glycation or the Maillard reaction. Theoretically the chemistry of glycation may be divided into three stages- the early, advanced, and final stages. The early stage involves reactions between sugar carbonyls and side chains of reactive amino acids, essentially lysine and arginine and the terminal $\alpha$-$NH_2$ of a protein, to form a Schiff base. The Schiff base is thermodynamically unstable and undergoes spontaneous rearrangement to form Amadori reaction products (ARP). The chemistry involved in subsequent stages of the reaction is not fully understood. The advanced stage is initiated by degradation of the ARP through dehydration of the sugar moiety to form advanced glycation end products (AGE) (Hodge J.E. (1953). Dehydrated Foods. Chemistry of browning reactions in model systems. Agric. Food Chem. 1: 928-943).

Temperature, water content, and reaction time are key parameters affecting the Maillard reaction (Labuza, T.P. and Baisier ,W.M. (1992). The kinetics of nonenzymatic browning. In: Physical Chemistry f Foods, pp. 595-649. Schwartberg, H.G. and Hartel., Eds, Marcel Dekker, New York). Increased temperature and reaction time greatly increase the extent of glycation and the diversity of the amino sites involved, and glycation proceeds at a faster rate under dry conditions (i.e., restricted water environment) than in aqueous solution (wet conditions) owing to the higher concentration of the reactants in the absence of water. In addition, water can hinder the rate of the initial ARP (Olivier C.M. (2011). Insight into Glycation of Milk Proteins: An ESI-and MALDI-MS. Crit. Rev. in Food Sc and Nut., 51:410-431).

The extent of glycation can be determined by monitoring the decrease in the amount of free amino groups during the heating process since these diminish during the course of glycation of the protein. This can be done at line, or it can be used to correlate with another measurement that is performed at line, e.g. nephelometric turbidity. Measuring the absorbance at 420nm, resultant from the colour reaction between free amino groups and 2,4,6-trinitrobenzenesulfonic acid (TNBS) as described by S.L. Snyder and P.Z. Sobocin Analytical Biochemistry, 64, 284-288 (1975), determines the concentration of unreacted amino groups. According to the present invention, the method can be modified by the addition of urea to an aliquot of the protein sample (to a concentration of 0.1-6M urea) which dissociates aggregated protein in the heated liquid material facilitating determination of the extent of glycation in near real-time and thus at-line. **Glycation buffer**: 0.1 M sodium tetraborate solution (pH 9.3). **Colour reagent**: 0.03M TNBS (2,4,6-trinitrobenzenesulfonic acid) (TNBS dissolved in distilled water).

A convenient instrument is the Hach DR/890 colorimeter.

A method to set up the standard curve for determination of degree of glycation is now described.

a. Heat-treat 500 ml of reaction mixture to 95 °C in laboratory water-bath whilst stirring with a glass rod.

b. Remove 2 ml samples (in triplicate) at increasing temperature increments and cool to room temperature.
c. Add 100 μl, 250 μl or 500 μl of 8M urea to each of the triplicate samples, mix and let them sit for at least 10 minutes.
d. Measure free amino groups by addition of 200 μl sample containing urea to 10 ml glycation buffer described above. Use as a control 200 μl of the non-heated sample added to 10 ml of glycation buffer.

The results should show a significant linear decrease in amino-groups as a function of heating temperature and time. If satisfactory results are not obtained two approaches should be followed to increase sensitivity:

- Increase the sample volume added to glycation buffer;
- If the sample is turbid, test addition of different volumes of 8M urea to 2 ml samples as described above. The % urea should be the same for the control and heat treated samples.

The percentage glycation is calculated as: [(absorbance of non-heated sample **minus** absorbance of heated sample)/abs of non-heated sample] x 100.

Other methods of determining degree of glycation, discussed above, may be useful to correlate with or calibrate this measurement.

**Control of glycation and denaturation**

The process of the present invention yields denatured and aggregated polymers of glycated proteins. The temperature and time of heat treatments of the process are not more severe than standard pasteurisation temperatures currently implemented in the dairy industry: pasteurization at 85°C for 30 seconds or UHT (135 °C for 15 seconds), or preparation of starch containing products such as custard which involves heating of milk proteins and starch for up to 20 minutes at temperatures as high as 85 °C. It is most likely that the Maillard reaction does not proceed further than Amadori Reaction Products (ARP) as the colour of the liquid or dried products shows no or slight yellow discolouration (second stage of Maillard reaction), but not brown discolouration (third stage of Maillard reaction).

Therefore, the conjugates prepared according to the present invention are generally not strongly coloured. This can in principle be quantified by measurement of the absorbance of the conjugate at 420nm. In conducting this measurement, 8M urea should be added to the sample to minimise turbidity caused by protein aggregates. The absorbance of 1% protein solution would not be higher than 0.1 units compared to the control. Moreover, in general the free SH of conjugate will be increased compared to that of native protein, while the total SH of conjugate should not be reduced compared with the native protein (reduced total SH indicates formation of disulfide bonds, which the processes of the present invention permit to be avoided).

In order to control the reaction, the following techniques can be used to control glycation separately from denaturation:

1) the Maillard reaction generally proceeds more quickly at higher pH;
2) variation in type and concentration of reducing sugar in the solution;
3) heat treatment of protein and sugar solution at temperature and time to obtain desired protein denaturation by measurement of free SH groups and particle size, followed by cooling of solution below protein denaturation temperature (between 50-60 °C), and incubation at this temperature for a time sufficient to obtain desired degree of glycation;
4) controlled thermal denaturation of protein solution (by control of SH groups and particle size) in the absence of sugars, followed by cooling of solution below denaturation temperature; followed by addition of reducing sugar and incubation at temperature between 50-60 °C for a time sufficient to obtain desired degree of glycation.

**Effect of temperature intensity, pH, protein, sugar concentration and total solids on glycation**

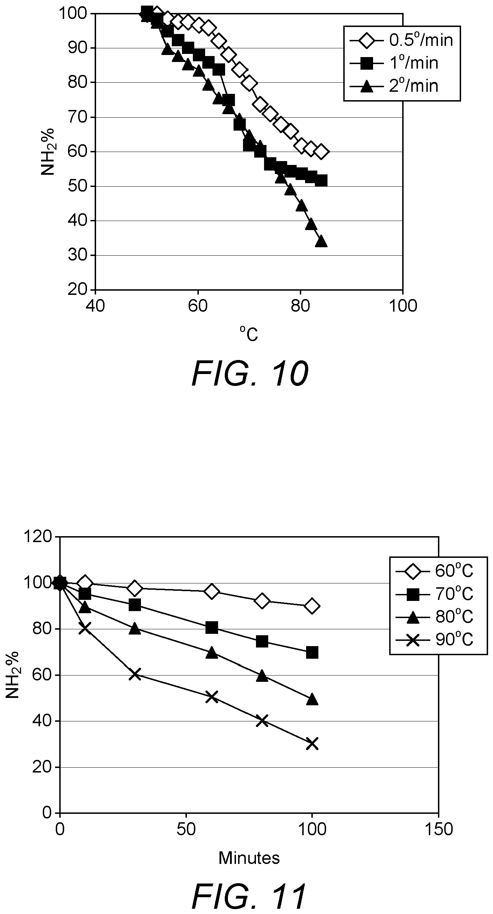

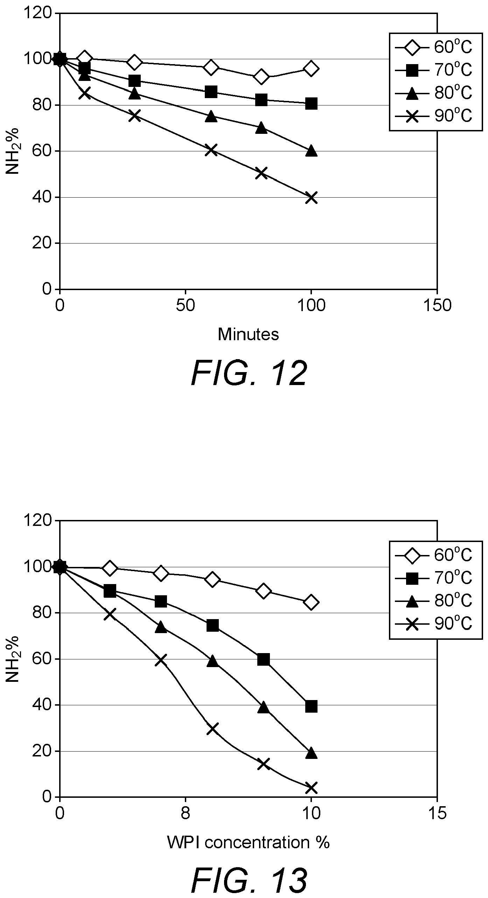

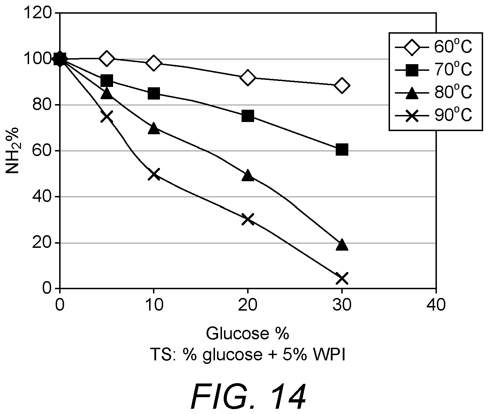

Figures 10 to 14 demonstrate the effect of different variables on the % reduction of amino groups of whey protein isolate (WPI) and glucose solutions (2 ml samples in test tubes were heat treated at increasing temperatures at a rate of 1 degree C per minute and cooled on ice when target temperature or time of incubation was reached).

These illustrate how the glycation of the protein can be controlled by manipulation of the reaction parameters.

**Tests of functionality**

The functionality of conjugates (glycated and denatured proteins according to the present invention or made using processes as disclosed herein) may show increased functional properties compared to control (protein + reducing sugar; or denatured protein + reducing sugar) using one or more tests of functionality as follows:

A: formation of emulsions: coarse or fine oil/in water emulsions can be tested by being made on laboratory scale
B: increased viscosity of an oil/water emulsion made with the conjugate at neutral or acidic pH
C: increased emulsification activity in an oil/water emulsion; this can be determined as smaller average oil droplet size of the emulsion made with the conjugate
D: increased emulsification stability
E: increased water holding capacity of an oil/water emulsion made with the conjugate
F: increased foaming ability and stability
G: increased solubility of the conjugate
H: increased water holding capacity of the conjugate
I: increased acid stability of the protein (increased WHC and solubility at acidic pH)
J: increased storage modulus (G') by rheological measurements
K: formation of harder gels at lower temperature

It may be convenient when initially making a conjugate to first test for functionalities B to F when making the conjugates on laboratory scale. The results of the rest of the tests (G to K) will often be found to confirm the first functionality tests but it will usually be desirable to perform these tests before up-scaling of the manufacture of selected conjugates. A manner of making emulsions A, and performing the tests B to K, will now be described in more detail.

**A. Emulsions**

**Coarse Emulsions**

Emulsions are prepared containing 50% v/v oil, and 50% v/v of the conjugate solution. The volume of the emulsion is usually 200-300 ml. Oil is added to the conjugate solution by pouring it through a funnel while blending with an electric handmixer, ensuring that the oil is added at a constant rate. Electric mixing is continued for 30 seconds after all the oil has been added. The total mixing time (adding of oil + blending) should be constant, e.g. 1 minute or 1 minute 30 seconds. To ensure uniform emulsions it is important to add the oil at constant rate and to emulsify for a constant time at constant speed. Emulsification should also be in the same size and shape of container.
To make emulsions in order to test emulsion properties at acidic pH, the emulsion can be acidified by addition of 20% acetic acid while stirring, until the pH reaches 4.5.

**Fine Emulsions**

A finer emulsion can be made by preparing a larger coarse emulsion as described above e.g. 1 liter, followed by homogenization using a laboratory scale homogenizer (such as supplied by APV) at 200-300 bar. Homogenisation of the coarse emulsion should be within 30 minutes after it has been made.

**B Viscosity of emulsions**

This can be measured, for example, using a Brookfield DV-1 viscometer (Brookfield Viscometers Ltd). Viscosity is measured in duplicate using spindle 4 at 60 rpm (torque 20-30%) .
This can also be measured using a Bohlin Gemini Rheometer (Malvern Instruments Ltd). Viscosity is determined at 25 °C using plate and cone geometry with a cone diameter of 40 mm and a cone angle of 4° (C4/40). A controlled shear rate ranging from 0 to 50 (1/S) is selected. The sample is brought into the lower plate using a plastic spatula and the gap is filled up by lowering the upper cone down to the designated gap (150 $\mu$m). The extra sample around the edge of the plate is trimmed with tissue.

**C. Emulsifying activity of conjugate in the emulsion**

The average or mean droplet size can be determined, for example, by measuring the oil droplet size distribution by laser light diffraction using a Mastersizer 2000 (Malvern Instruments Ltd, Malvern, UK). The refractive index (RI) of particles is set at 1.470 and the laser obscuration is adjusted at 10%. Triplicate measurements are carried out and the results presented are the mean of three replicates. The % decrease in average droplet size compared to the control is a measure of the emulsifying activity.

**D. Emulsion stability**

Emulsion stability can be determined, for example, by measurement of turbidity at 500 nm using a UV spectrophotometer after emulsions have been aged for 24 h. Emulsions are diluted with 0.1% SDS (Sodium dodecyl sulfate) solution to an oil-volume fraction of 0.01-0.2%. The diluted samples are poured in quartz cuvettes with a path length of 0.01 m and all measurements are carried out at a wavelength of 500 nm. The turbidity is calculated using Eq. (1) given below.

$$T = 2.303 \times (A \times V / 1) \qquad (1)$$

where T is turbidity of emulsions in $m^{-1}$, A is the observed absorbance, V is the dilution factor, and 1 is the pathlength of the cuvette which is 0.01 m.

The emulsifying stability index (ESI) is determined using the equation (2)

$$ESI = (T_0 \times \Delta t) / \Delta T \qquad (2)$$

where ESI stands for emulsifying stability index in hour, $T_0$ is the turbidity of emulsion in $m^{-1}$ determined immediately after it was prepared, $\Delta T$ is the value change of turbidity in $m^{-1}$ in time interval $\Delta t$ (24 h) .

**E. Water holding capacity (WHC) of the emulsion**

WHC can be determined, for example, as follows.

Pour 100ml of the emulsion in a 100 ml measuring cylinder and let it stand for 12 hours. Measure the water separation on top of the oil.

$$WHC\% = (W_t - W_r) / W_t \times 100,$$

where $W_t$ is total volume of water in sample and $W_r$ is volume of separated water.

**F. Foaming properties of the conjugate**

Foaming properties can be determined, for example, as follows.

200 ml of conjugate solution is mixed with 200 ml of distilled water and whipped for 1 minute with electronic whisk at room temperature. The foaming ability and stability (at 30 minutes) are calculated as follows:

$$Foaming\ ability\% = 100\% \times (volume\ of\ foam + sample\ at\ 0\ min$$
$$after\ whipping - volume\ of\ sample) / volume\ of\ sample$$

$$Foaming\ stability\% = 100\% \times (volume\ of\ foam\ at\ 30\ min\ after$$
$$whipping / volume\ of\ foam\ at\ 0\ min\ after\ whipping)$$

**G. Protein solubility of conjugates**

To assess the effect of glycation on solubility of conjugates, the solubility can be determined as the percentage of protein remaining in the supernatant after centrifugation. One milliliter of conjugate or control is added to a 1.5 ml centrifuge tube. The samples are centrifuged at 10,000g for 20 min and the protein content of the supernatant is determined by the Bradford assay (Bradford, M. M. (1976). A rapid and sensitive method for the quantitation of microgram quantities of protein utilizing the principle of protein-dye binding. Analytical Biochemistry, 72, 248-254.).

Percentage solubility is calculated as the ratio of protein content of the supernatant to total protein content of the samples $\times 100$. The total protein can be determined by the Kjeldahl method, which determines both soluble and insoluble protein.

**Protein determination by the Bradford Assay**

The Bradford method is a common colorimetric method to determine soluble protein concentration in a sample solution. It is based on the binding of a dye, Coomasie Blue G, to the protein. This binding shifts the absorption maximum of the dye from red to blue. The absorbance of the solution is measured at 595 nm and is proportional to protein concentration when compared to a standard curve.

*Materials*

- Coomasie Blue G

- Ethanol

- Phosphoric acid, 85%

- Test Tubes

- Bovine Serum Albumin

- Spectrophotometer

- Micropipettes and tips

- Bradford reagent (can be obtained from Sigma-Aldrich)

*Method of Protein Determination by the Bradford Method*

a. A 10 ml aliquot of the Bradford concentrate solution is diluted 1:5 (1x) with water to prepare the working solution.
b. In separate tubes, prepare Bovine Serum Albumin (BSA) dilutions of 1.2, 1.0, 0.8, 0.6, 0.3, and 0.1 mg/ml from the 10 mg/ml stock.
c. Label six test tubes 1-6, a seventh tube as "blank" and tubes 8-10 as "unknown".
d. To tubes 1-6, add 100 microliters of the 1.2, 1.0, 0.8, 0.6, 0.3, and 0.1 mg/ml BSA solutions, respectively, and 100 microliters of distilled water is added to the blank tube. Analyze in triplicate 100 microliters of the unknown sample of BSA in tubes 8-10.
e. Add five (5) ml of diluted (1x) Bradford reagent to each of the 10 tubes. Stir and let incubate for 20 minutes.
f. The Spectrophotometer is set at 595 nm, and the instrument is zeroed against the water blank. The absorbance of the other tubes is then measured at 595 nm. The absorbance of each tube (y-axis) is plotted against the protein mass in micrograms (x-axis) and a straight line is drawn through the points.
g. The amount of protein in the unknown tubes is determined by its absorbance and comparison to the standard protein curve. The concentration of the solution is calculated by the following equation:

```
Concentration of unknown = mg of Protein determined by
assay / 0.1 ml
```

The Bradford method detects specific amino acids such as arginine, which is believed to be responsible for the binding of the dye to the protein.

**H. Acid stability of conjugates**

The effect of glycation on solubility of proteins at acidic pH can be determined by measuring the percentage of protein remaining in the supernatant after centrifugation. Conjugate solutions that had been acidified to pH 4.5 with 20% acetic acid, are pipetted 1 ml each into 1.5 ml micro-centrifuge tubes. After centrifugation at 10,000g for 20 min, the protein content of the supernatant is determined by the Bradford assay. Percentage acid stability is calculated as the ratio of protein content of the supernatant to total protein content of the sample $\times 100$.

**I. Water holding capacity (WHC) of conjugates**

WHC can be measured, for example, according to Kocher and Foegeding (Kocher, P. N., & Foegeding, E. A. (1993). Microcentrifuge-based methods for measuring water-holding of protein gels. Journal of Food Science, 58, 1040-1046) with some modifications.

According to this method, heat-treated conjugate dispersions (500 μl each) are pipetted into the inner tube of a VectaSpin micro-centrifuge filtration unit (Micro centrifuge filtration tubes (0.45mm pore size) were obtained from Fisher Scientific, UK) followed by centrifugation at 8000 rpm for 10 min in a Mini-Spin centrifuge (Eppendorff, Hamburg, Germany). The filtration unit consists of a 1.5 ml micro-centrifuge tube that collects released fluid, and a polypropylene filter insert (0.45 μm pore size) that holds the sample. After centrifugation, the water released in the outer tube is weighed.

WHC is calculated as $WHC\% = (W_t - W_r)/W_t \times 100$,

where $W_t$ is total gram of water in sample and $W_r$ is gram of water released

**J. Dynamic rheological measurements of conjugates**

Rheological measurements can be performed, for example, using a Bohlin Gemini Rheometer (Malvern Instruments Limited, Worcestershire, UK). The storage modulus G' and viscous modulus G" are measured using a cone diameter of 40 mm, a cone angle of 2° (C 2/40) and a designated gap of 70 μm. The sample is brought into the lower plate using a plastic spatula and filled up the gap by lowering the upper cone down to the designated. The extra sample around the edge of the plate is wiped off with tissue. Dimethylpolysiloxane is added around the plate to prevent water evaporation. The temperature cycle is programmed to heat the samples from 25 to 85 °C for 3 min, keeping the temperature at 85 °C for 10 min and cooling down to 25 °C for 3 min. The strain applied is 0.01, which is within the linear visco-elastic region. The oscillation frequency is 1 Hz.

**K. Texture analysis of conjugate gels**

Texture analysis can be conducted, for example, as follows. Equal volumes (50 ml) of the conjugate dispersion at neutral pH or acidified to pH 4.5 with 20% acetic acid are added into plastic containers of uniform shape. Some of the solutions remain non-heated and others are heat treated in a water bath at 85 °C for 10 min and cooled to room temperature without removing them from the containers. Gel hardness is measured by a texture analyser, Zwick Testing Machine, type BDO-FB05.TS (Zwick/Roell, Germany) with a 20 mm indenter (20 mm diameter×40 mm height) using one test cycle, with a preload force of 0.02 N and preload speed of 10 mm/min. The force-time curves are obtained at a speed of 10 mm/min for a 10 mm indentation. Gel hardness is measured as the maximum force in the force-distance curve.

The invention is now described by the following nonlimiting examples below:

Example 1

10% (protein concentration w/v) of Hiprotal 865 (65% protein and 20% lactose) obtained from Friesland Foods Domo, Netherlands, was heated at 75 °C from 0 to 10 minutes in a water bath (the volume of the heated whey samples was 50 ml samples). The turbidity, SH-groups and glycation degree was measured at 2 minute intervals. The sample heated for 8 minutes was cooled to room temperature and tested for viscosity, heat-induced gel hardness and acid stability.

Comparative Example

As control, a 50 ml sample of 10% (protein concentration) of whey protein isolate (92% protein) that contains no lactose, was also heated at 75 °C from 0 to 10 minutes in the water bath. After 1 minute of heating, the sample started to gel. Therefore after heating the WPI for 1 minute, it was cooled to room temperature and 20% lactose was added. This was used as control in all tests of functionality.

Measurement of turbidity

The turbidity meter used was a Ratio White Light Nephelometer (operable in ratio and non-ratio modes). This equipment uses a nephelometric detector at 90° to the incident light as the primary detector, and includes other detectors to minimize interference. In addition this equipment is portable and of a relatively small size which can easily be placed near the site where processing takes place.

200 μl of heated protein solution was added to 30 ml of "turbidity" dilution buffer having the following composition: 10% w/v sucrose and 0.1% w/v Tris, pH 6.5. The diluted sample was introduced into a 30 cm long glass cuvette for analysis in the turbidity-meter. The glass cuvette was capped and inverted twice to mix the solution and the turbidity was measured immediately. A non-heat-treated whey sample was used as control.

## Measurement of sulfhydryl groups

The equipment used was a portable colorimeter which can be handheld and easily transported to the site where processing takes place.

200 $\mu$l of heated protein solution was added to 30 ml "sulfhydryl buffer" (-SH group chemical reaction system) having the following composition 0.086M Tris, 4mM EDTA, 0.09M Glycine, 3 $\mu$m DTNB (5, 5'-dithiobis(2-nitrobenzoic acid)). The diluted sample was introduced into a glass cuvette for the photometer. The glass cuvette was capped and inverted twice to mix the solution and the absorbance was measured at 412 nm after 5 minutes incubation. The sample can be incubated for a period of 1-30 minutes before reading the absorbance, but the timing of reading should be constant for all samples since DTNB changes colour with time. A non-heat-treated whey sample was used as a control as before.

The "total" sulfhydryl groups of the non-heat-treated whey protein sample was determined beforehand at the same protein concentration and the same "sulfhydryl buffer" as above containing 8M urea to fully denature the protein. The sample was allowed to react with the buffer containing urea for 5 minutes before reading the absorbance. This value was taken as the 100% denaturation value.

## Measurement of degree of glycation

Glycation degree was measured according to the method of Synder and Sobocinski (Snyder, S. L. and Sobocinski, P. Z., 1975, An improved 2,4,-trinitrobenzesulfonicacid method for the determination of amines. Analytical Biochemistry, 64, 284-288) with some modifications. 50 $\mu$l of sample was added to a solution of 10 ml 0.1 M sodium tetraborate (pH 9.3) and 200 $\mu$l of 2M urea, mixed well. The mixture was allowed to stand at room temperature for 10 min. 50 $\mu$l of colour reagent (0.03 M TNBS, dissolved in 0.1 M sodium tetraborate solution) was added to the above mixture, mixed well and allowed to stand at room temperature for 10 min.

Absorbance was read at 420 nm. Samples added to the solution of sodium tetraborate and urea, without TNBS were used as blanks. Glycation degree (%) was calculated as the following formula:

(absorbance of the control - absorbance of the heated sample with lactose) / absorbance of control

The inclusion of urea in the reaction mixture allows for dissociation of protein aggregates, which would interfere with absorbance at 420 nm.

## Measurement of heat-induced gel hardness

The following solutions (8% protein concentration) were adjusted to pH 5 and heated in a water bath at 70 °C for 20 minutes:

(i) non-heated Hiprotal 865;
(ii) Hiprotal 865 heated at 75 °C for 8 min. and cooled as above;
(iii) heated and cooled WPI control plus lactose. After cooling, the hardness of the gels was measured by textural analysis using a Zwick Testing Machine, type BDO-FB05.TS.

## Measurement of viscosity

Viscosity of samples i, ii and iii described above was measured at room temperature with a Brookfield DV-1+viscometer.

## Measurement of acid stability

Acid stability of samples i, ii and iii described above was measured as follows:

The samples were acidified to pH 4.5 with acetic acid and centrifuged at 10,000 g for 20 min. The protein content in the supernatant was determined by the Bradford assay (Bradford, M. M. (1976). A rapid and sensitive method for the quantitation of microgram quantities of protein utilizing the principle of protein-dye binding. Analytical Biochemistry, 72, 248-254). Percentage acid stability was calculated as the ratio of protein content of the supernatant to total protein content of the samples before acidification $\times$ 100.

Table 1

| | Heated and cooled WPI +20% lactose | Native Hiprotal 865 | Hiprotal 865 heated at 75°C for 8 minutes and cooled |
|---|---|---|---|
| Glycation degree % | 0 | 0 | 9.05 |
| Denaturation degree % | 89 | 0 | 86 |
| Viscosity at pH 6.7 (cP) | 3.7 | 1.7 | 14 |
| Viscosity at pH 4.6 (cP) | 3.2 | 1.7 | 3.9 |
| Gel hardness (N) | 0.22 | 0 | 0.63 |
| Acid stability (%) | 71 | 91 | 82 |

**Discussion**

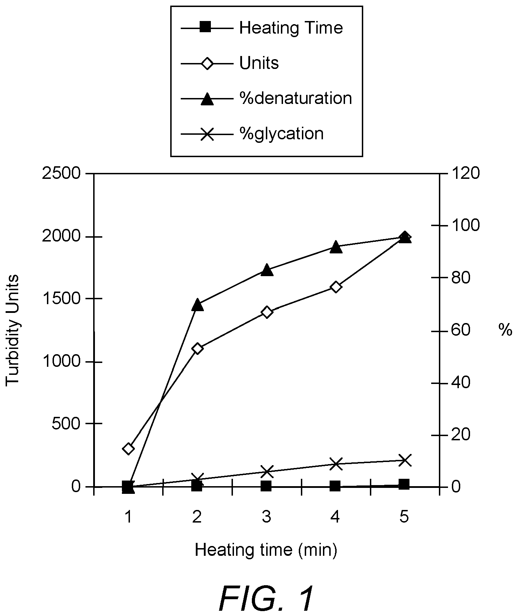

Fig.1 shows the increase in SH-groups (denaturation), turbidity and glycation degree of Hiprotal 865 at 10% protein concentration, heated at 75 °C from 0 to 8 minutes. Gelation occurred after 9 minutes heating. Table 1 shows a significant increase in viscosity and heat-induced gelation at pH 5 of the cooled product (heat-treated for 8 minutes) compared to the same protein concentration of non-heated Hiprotal 865 as well as the WPI control plus 20% lactose.

The whey protein isolate sample containing no lactose, started to gel after 1 minute of heating at 75°C, which made any measurements impossible. In comparison, the Hiprotal 865 that contains 20% lactose, started to gel after heating for 10 minutes. This confirms that the presence of lactose increased the denaturation temperature of the protein, in other words it delayed heat-induced gelation of the whey protein.

These results indicate that glycation combined with denaturation result in a (cooled) whey protein product with:

- increased viscosity and heat-induced gel strength, compared to the denatured, non-glycated control (increased viscosity is synonymous with increased water holding ability)
- heat-induced gel strength compared to the denatured, non-glycated control; and
- improved acid stability compared to the denatured, non-glycated control.

Example 2

**Methods**

10% (protein concentration w/w) of Carbery WPI (whey protein isolate) with or without 5% lactose (w/w) were dissolved in $dH_2O$ by stirring for 2 hours at room temperature by magnetic stirrer. The solutions were heated at different temperatures at different times. Turbidity and glycation degree were measured as describe in example 1. The free and total SH groups were measured as described in example 1.

The denaturation (%) was calculated as:

$$\text{Free SH / total SH \% = } B_f \text{ x } 100 / B_t$$

Where $B_f$ is the absorbance of the free SH groups
$B_t$ is the absorbance of the total SH groups

The solutions were diluted to 1% protein concentration, followed by acidification to pH 4.6 with acetic acid. 20% sunflower oil (w/w) was emulsified with the diluted acidic solutions respectively. Average oil droplet diameter (D3,2) was measured immediately after emulsification, by laser diffraction analysis using a Malvern Mastersizer equipment. Non-heated WPI with or without lactose were used as controls.

Table 2

| Samples | $D_{3,2}(\mu m)$ (pH 4.5) | Turbidity | Denaturation % | Glycation % |
|---|---|---|---|---|
| Control with lactose | 14.696 | 201 | 17.6 | 0 |
| 62 °C with lactose | 14.889 | 221 | 18.3 | 0.8 |

(continued)

| Samples | $D_{3,2}$ ($\mu$m) (pH 4.5) | Turbidity | Denaturation % | Glycation % |
|---|---|---|---|---|
| 62 °C, 5 min with lactose | 12.098 | 248 | 18.6 | 6.3 |
| 62 °C, 15 min with lactose | 14.795 | 348 | 18.8 | 7.9 |

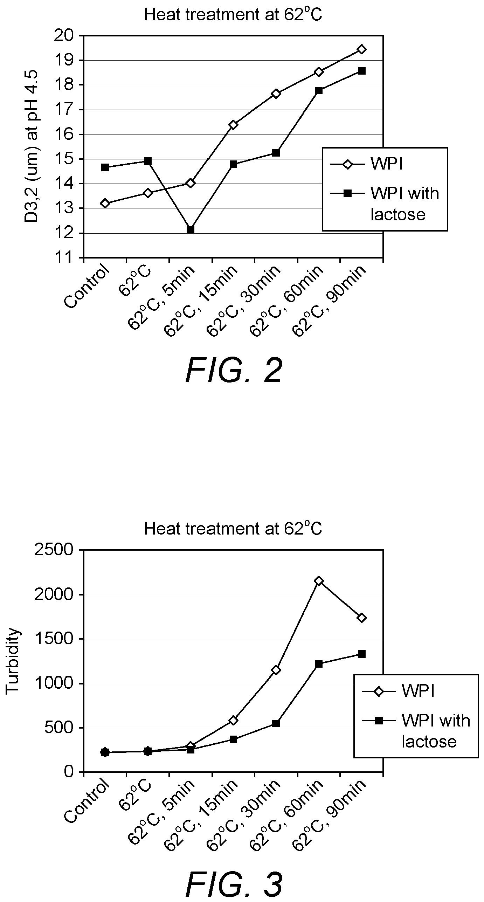

Figures 2, 3 and 4 show that the emulsifying ability of WPI heated at 62 °C in the presence of lactose increased after 5 minutes heating, compared to WPI heated without lactose. At this point the WPI/lactose caused a decrease in average oil droplet size, which signifies a significant increase in emulsifying ability at pH 4.6. This trend was also repeated with heat treatment at 60 °C and 65 °C.

Table 2 shows that WPI/lactose heated at 62 °C reduced the average oil droplets size by 2.6 $\mu$m (compared to the control) at an increase in denaturation of 1%, a glycation degree of 6.3% and an increase in turbidity of 27 units. WPI/lactose heated at 65 °C reduced the average oil droplets size by 2 $\mu$m (compared to the control) at an increase in denaturation of 0.9%, a glycation degree of 6.6% and an increase in turbidity of 38 units.

The emulsifying properties of native (i.e. non-denatured) whey proteins show relatively complex pH dependence. A minimum in emulsifying properties is observed at the isoelectric point (pH 4.5), which can be attributed to the minimum in protein solubility that occurs at this pH value. At pH values above and below the isoelectric point (pI) emulsifying properties improve, due to improved solubility of native protein.

The emulsifying ability of denatured whey protein (even partially denatured) generally decreases due to the uncontrolled formation of aggregates, which masks the exposed hydrophobic protein areas that would interact with the oil droplet surface. In this example, the partially denatured (5-6% increase in SH-groups) and glycated (6-7%) whey protein isolate shows an increase in emulsifying properties at pH 4.5. At these modification levels, the whey protein isolate shows an initial increase in turbidity, which signifies an increase in particle size which could be attributed to either protein denaturation or aggregate formation.

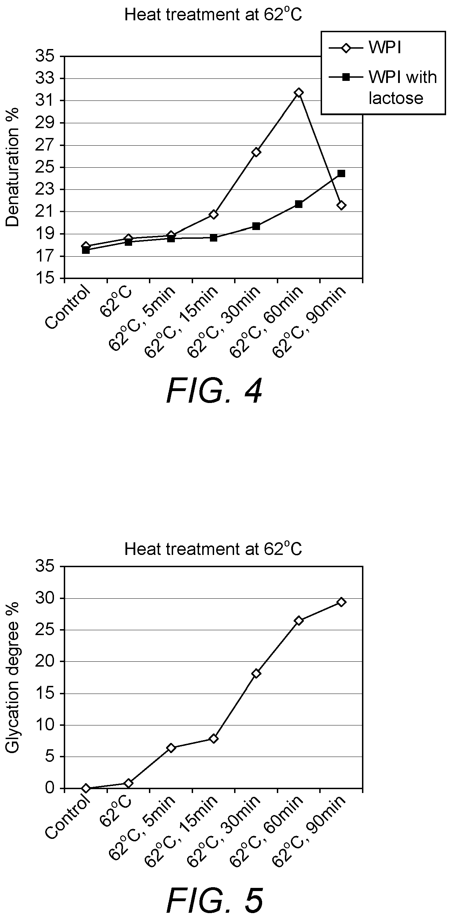

Further increase in denaturation (SH-groups), particle size (aggregation) and glycation cause a decrease in emulsifying properties. The increase in emulsifying properties of the whey protein isolate that is at the initial stage of unfolding (0.9-1% denaturation), showing little aggregation (small initial increase in turbidity) and relatively low glycation degree (6-7%), is attributed to the partial unfolding of the protein, that exposes hidden hydrophobic sites which interact with the oil droplet surface, before further denaturation occurs which causes aggregation with neighbouring protein particles, thereby decreasing emulsifying ability. Glycation of the whey protein (6-7%) causes a change in the net electrostatic charge of the proteins, thereby changing the isoelectric pH and causes increased solubility at the pI. This also contributes to increased emulsifying ability at the iso-electric pH. Further increase in glycation leads to increased aggregate formation of denatured proteins, thereby reducing emulsifying ability (Figures 2 and 5 and Table 1).

This example shows that a glycated, partially denatured whey protein preparation with improved emulsifying properties can be obtained by heat treatment of liquid whey protein and lactose solutions, by at-line control of turbidity, SH-groups and glycation degree.

Fig. 5 shows that the maximum glycation obtained is about 35% (that means 35% reduction in available amino groups). Glycation of whey protein occurs mainly via the free amino group of lysine. Whey protein contains approximately 12g lysine /100g protein. If 35% of that becomes blocked, the product still has 9g/100g available lysine, a value very close to which is considered a good source lysine (8g/100g). This indicates that such degrees of glycation do not significantly impair the nutritional value of the whey protein.

## Example 3 - WPC80 : Dextrose

Whey Protein Concentrate 80 (5% protein) and 15% Dextrose (Tate & Lyle) were made up to 1 liter with distilled water at pH 7.0 and stirred for 10 minutes with magnetic stirrer to dissolve. The solution was heated in a water bath set at 90°C while stirring. Samples of 100 ml were removed at increasing temperature, starting at 50°C, and cooled immediately to room temperature in cold water. The control was 5% WPC80 that was heat-treated and cooled followed by addition and dissolving of 15% Dextrose. Turbidity, denaturation and glycation degree were measured immediately and samples were tested for viscosity in 50% oil emulsions.

The results in Table 3 show that the glycated samples had higher viscosity and smaller average oil droplet size than the non-glycated but denatured samples.

Table 3: Viscosity and average oil droplet size of 50% oil emulsions prepared with glycated and non-glycated protein samples

| Temperature °C | Denatured, non-glycated samples Viscosity (cP) | Denatured-glycated samples Viscosity (cP) | Denatured non-glycated samples Average oil droplet size ($\mu$m) | Denatured glycated samples Average oil droplet size (($\mu$m) |
|---|---|---|---|---|
| 25°C | 6 | 6 | 29.3 | 29 |
| 50°C | 11 | 19 | 24.4 | 20 |
| 60°C | 14 | 20 | 21.4 | 17.8 |
| 70°C | 20 | 28 | 20.5 | 16.2 |
| 80°C | 23 | 32 | 18.3 | 16.4 |

**Example 4 - Whey Protein Isolate: Maltose**

10% (protein concentration w/w) of Carbery WPI (whey protein isolate) and 10% Maltose obtained from Sigma Aldrich were dissolved to a total volume of 1 litre in distilled water at pH 7.0. The solution was heated in a water bath set at 95°C while stirring. Samples of 100 ml were removed at increasing temperature, starting at 50°C, and cooled immediately to room temperature in cold water. Turbidity of samples was measured immediately before cooling as described in Example 1 with the only modification being the addition of 1 ml of sample solution to 30 ml of buffer (10% sucrose, 0.1 M $Na_2HPO_4$, pH 9) in the cuvette. Measurement of free and total SH groups of the cooled samples was conducted at 420 nm as described in Example 1. The total SH was measured of the control sample and also of the heat-treated sample(s) that showed a decrease in free SH compared to the control. The denaturation degree was calculated as [(absorbance measured for glycated and denatured protein MINUS absorbance measured for native protein) / (absorbance measured for total sulfhydryl groups of native protein)] x 100. Reduction in free amino groups was measured by mixing of 200 $\mu$l of 8M urea with 2 ml of cooled sample and allowing to stand at room temperature for 10 min. Thereafter 200 $\mu$l sample containing urea was added to 10 ml glycation buffer (0.1 M sodium tetraborate solution pH 9.3) in the cuvette of the Hach DR/890 colorimeter. The absorbance at 420nm of the sample was set to zero (blanked) and that served as the control. Subsequently 50 $\mu$l of colour reagent (0.03 M TNBS, dissolved in 0.1 M sodium tetraborate solution) was added to the above mixture, and absorbance was measured again at 420 nm. Glycation degree (%) was calculated as the following formula:

```
(absorbance of the control - absorbance of the heated
sample)/absorbance of control.
```

Foaming ability of the cooled samples was tested by mixing 100 ml of conjugate solution with 100 ml of distilled water and whipping for 1 minute with an electronic whisk at room temperature. The foaming ability was calculated as follows:

```
Foaming ability% = 100% x (volume of foam + sample at 0 min
after whipping - volume of sample) / volume of sample.
```

Coarse emulsions (50% oil) were prepared with 100 ml of the cooled samples by pouring 100 ml oil through a funnel while blending the emulsion with an electric handmixer followed by 30 seconds blending. After 12 hours standing the viscosity, oil droplet size and water holding capacity of emulsions were measured. Viscosity was measured with a Bohlin rheometer at 25 °C at a shear rate ranging from 0 to 50 (1/S). Oil droplet size was measured with a Malvern Mastersizer at a refractive index (RI) of 1.470 and laser obscuration at 10%. Increase in emulsifying activity was judged by the decrease in average oil droplet volume median diameter D(v,0.5). Water holding capacity was measured by measuring water separation of the emulsion after 12 hours in a 100 ml measuring cylinder. Water holding capacity (WHC) was calculated as WHC%=$(W_t-W_r)/W_t\times100$,

where $W_t$ is total volume of water in sample and $W_r$ is volume of separated water.

The results in Table 4 show that the viscosity, water holding capacity and emulsifying activity increased corresponding to increase in SH groups and denaturation and glycation degree. The sample heated to 80°C showed an approximately 100- fold increase in viscosity compared to the control. It is anticipated that maximum thickening functionality could be obtained by heat treatment of the sample under the same conditions at 79, 80, 81 or 82 °C. The foaming ability increased at denaturation between 9 and 14% but decreased after further denaturation. Decrease of both free SH and total SH groups of protein occurred at 85°c. This corresponded to appearance of visibly coagulated protein particles and an emulsion with unacceptable gritty texture and gelled appearance.

Table 4: Physicochemical properties of a heat- treated solution of whey protein isolate (10%) and maltose (10%) as a function of temperature and corresponding functional properties as tested in 50% oil emulsions.

| Temp °C | Turbidity | Free SH | Total SH | Denaturation % | Glycation % | Oil droplet size ($\mu$m) | Foaming Ability% | Viscosity (Pas) | WHC% |
|---|---|---|---|---|---|---|---|---|---|
| Control | 305 | 0.563 | 1.782 | 0.0 | 0.0 | 11.04 | 440 | 7 | |
| 50 | 291 | 0.561 | | 0.0 | 0.0 | 12.29 | 440 | 7 | 76.0 |
| 60 | 286 | 0.554 | | 0.0 | 2.1 | 14.91 | 440 | 7 | 76.0 |
| 70 | 324 | 0.724 | | 9.0 | 4.3 | 14.76 | 480 | 8 | 76.0 |
| 72 | 354 | 0.812 | | 14.0 | 5.2 | 14.32 | 480 | 12 | 80.0 |
| 74 | 430 | 0.986 | | 23.7 | 7.1 | 14.00 | 400 | 15 | 84.0 |
| 76 | 611 | 1.121 | | 31.3 | 9.3 | 13.60 | 200 | 21 | 88.0 |
| 78 | 985 | 1.498 | | 52.5 | 13.5 | 9.57 | 100 | 25 | 89.5 |
| 80 | 1532 | 2.103 | | 86.4 | 15.7 | 9.52 | 50 | 420 | 95.8 |
| 85 | 3540 | 0.956 | 1.134 | >100 | 21.3 | * | * | * | * |
| * Sample texture is gritty and unacceptable | | | | | | | | | |

**Example 5 - Soy Protein Isolate: Maltose**

Soy Protein Isolate (containing 90% protein) obtained from Solae and Maltose obtained from Sigma Aldrich were each dissolved at concentrations of 7.5% w/v in 1 litre distilled water at pH 7.0 and stirred for 30 minutes with magnetic stirrer to dissolve. The solution was heated in an oil bath set at 120°C while stirring at regular intervals. Samples of 100 ml were removed at increasing temperature, starting at 50°C, and cooled immediately to room temperature in cold water. Turbidity, free and total SH and reduction in free amino-groups were measured as described in Example 4. Denaturation and glycation degree were calculated as described in Example 4. Functionality of heat-treated samples was tested in 50% oil emulsions by measurement of viscosity, oil droplet size and water holding capacity as described in Example 4.

The results in Table 5 show that the viscosity, water holding capacity and emulsifying activity increased corresponding to increase in denaturation and glycation degree of soy protein. It was not possible to reach a denaturation degree higher than 41.6% under these heating conditions as it is known that soy protein requires higher temperatures to achieve full denaturation compared to whey and egg protein. The sample heated to 110°C resulted in doubling the emulsion viscosity compared to the control and approximately 50% reduction in average oil droplet size of the emulsion indicating significant increase in emulsifying ability of the conjugate. It is anticipated that further improvement in functionality could be obtained by heat treatment at higher temperatures as only partial denaturation of the protein was obtained under at the current heating conditions.

Table 5: Physicochemical properties of a heat- treated solution of soy protein isolate (7.5%) and maltose (7.5%) as a function of temperature and corresponding functional properties as tested in 50% oil emulsions

| Temp °C | Turbidity | Free SH | Total SH | Denaturation% | Glycation% | WHC% | Oil droplet size ($\mu$m) | Viscosity (Pas) |
|---|---|---|---|---|---|---|---|---|
| Control | 212 | 0.155 | 1.123 | 0.0 | 0.0 | 96 | 20.53 | 203 |
| 50°C | 216 | 0.151 | | 0.0 | 0.0 | | | |
| 60°C | 216 | 0.154 | | 0.0 | 1.1 | | | |
| 70°C | 216 | 0.156 | | 0.0 | 5.6 | | | |
| 75°C | 216 | 0.156 | | 0.0 | 8.1 | 96 | 20.01 | 205 |
| 85°C | 232 | 0.213 | | 5.2 | 11.2 | 98 | 15.21 | 262 |
| 95°C | 232 | 0.258 | | 9.2 | 18.5 | 100 | 14.81 | 328 |
| 100°C | 272 | 0.358 | | 18.1 | 24.1 | 100 | 11.61 | 389 |
| 110 °C | 290 | 0.621 | | 41.6 | 35.9 | 100 | 9.25 | 429 |

**Example 6 - Whey Protein Isolate: Fructose**

10% (protein concentration w/w) of Carbery WPI (whey protein isolate) and 10% Fructose obtained from Sigma Aldrich were dissolved in 1 litre distilled water at pH 7.0. The solution was heated in a water bath set at 95°C while stirring. Samples of 100 ml were removed at increasing temperature, starting at 50°C, and cooled immediately to room temperature in cold water. Turbidity, free and total SH and reduction in free amino-groups were measured as described in Example 4. Denaturation and glycation degree were calculated as described in Example 4. Foaming ability of samples was measured as described in Example 4. Functionality of samples was tested in 50% oil emulsions by measurement of viscosity, oil droplet size and water holding capacity as described in Example 4.

The results in Table 6 show that the viscosity, water holding capacity and emulsifying activity increased corresponding to increase in SH groups and denaturation and glycation degree. The foaming ability increased at denaturation of 3.1% but decreased after further denaturation. The sample heated to 80°C resulted in an approximately 5- fold increase in emulsion viscosity compared to the control. It is anticipated that maximum thickening functionality could be obtained by heat treatment of the sample under the same conditions at 79, 80, 81 or 82 °C. Reduction of both free SH and total SH groups of protein occurred at 85°C. This corresponded to appearance of visibly coagulated protein particles and emulsion with unacceptable gritty texture and gelled appearance.

Table 6: Physicochemical properties of a heat- treated solution of whey protein isolate (10%) and fructose (10%) as a function of temperature and corresponding functional properties as tested in 50% oil emulsions.

| Temp °C | Turbidity | Free SH | Total SH | Denaturation% | Glycation % | Foaming ability% | WHC% | Oil droplet size (μm) | Viscosity (Pas) |
|---|---|---|---|---|---|---|---|---|---|
| Control | 314 | 0.558 | 1.773 | 0.0 | 0.0 | 420 | 75.0 | 11.88 | 4 |
| 50 | 289 | 0.551 | | 0.0 | 0.0 | 420 | 75.0 | 12.63 | 4 |
| 60 | 293 | 0.555 | | 0.0 | 0.0 | 420 | 75.0 | 14.94 | 4 |
| 70 | 313 | 0.614 | | 3.1 | 3.2 | 440 | 78.0 | 14.21 | 4 |
| 75 | 387 | 1.115 | | 31.4 | 5.1 | 400 | 85.2 | 11.44 | 10 |
| 78 | 685 | 1.685 | | 63.6 | 8.0 | 220 | 89.8 | 10.86 | 20 |
| 80 | 1532 | 1.885 | | 74.8 | 9.5 | 120 | 94.0 | 10.43 | 22 |
| 85 | 3420 | 1.087 | 1.231 | >100 | 13.3 | * | * | * | * |
| * Sample texture is gritty and unacceptable | | | | | | | | | |

**Claims**

1. A process for glycating and denaturing a globulin or globular protein in a liquid material, said liquid material further comprising a reducing sugar, said process comprising:

   heating said liquid material at a temperature of 55-95 °C at a pH of between 5 and 9 for a time sufficient both to denature and glycate said protein; and
   controlling the glycation of said protein and controlling the degree of denaturation of said protein;
   wherein said controlling includes at line measurement of at least one parameter selected from degree of aggregation represented by turbidity, degree of denaturation represented by free SH groups, and degree of glycation represented by free amino groups; and adjusting the heating or pH, if required, in response to the measured parameter.

2. The process of claim 1 wherein the process is terminated when said controlling reveals that said protein has attained a desired degree of glycation, or when said controlling reveals that said protein has attained a desired degree of denaturation.

3. A process according to claim 1 or claim 2, wherein said controlling further includes comparison of the at line measurement of at least one parameter with a value previously established for said at least one parameter, wherein said previously established value is indicative of a value of at least one further parameter.

4. A process according to claim 3, wherein at least one further parameter is selected from parameters relating to the degree of glycation of the protein, parameters relating to the degree of denaturation of the protein, and functional properties of the glycated and denatured protein.

5. The process of claim 1, wherein the denaturation degree is controlled by:

   collecting a sample of the heated liquid material;
   mixing said collected sample with a chemical -SH group reaction measurement system;
   comparing the SH-group measurement obtained with previously established SH-group measurement limits corresponding to a desired degree of denaturation; and
   in the event of any deviations from the desired denaturation degree,
   adjusting the heating so as to conform this to the desired value.

6. The process of any one of claims 1 to 5 further comprising controlling a degree of aggregation of said protein, and optionally, wherein the process is terminated when said controlling reveals that said protein has attained a desired degree of aggregation.

7. The process of claim 6 wherein the degree of aggregation of said protein is controlled by:

   collecting a sample of the heated liquid material;
   diluting said collected sample in a buffer formulated so that the pH in said sample is substantially unchanged, the ionic conditions in said sample are substantially unchanged, and the viscosity of said sample is at least substantially maintained, all relative to the undiluted sample,
   measuring the turbidity of said diluted sample relative to an untreated control sample;
   comparing the turbidity measurement obtained with previously established turbidity measurement limits corresponding to a desired average protein aggregate size range; and
   in the event of any deviations from the desired particle size, adjusting the heating so as to conform this to the desired value.

8. The process of any one preceding claim wherein the process is terminated by cooling the heated liquid material, suitably to 55 °C or below.

9. The process of any one preceding claim wherein the liquid material is an aqueous solution, dispersion or suspension comprising said protein and said reducing sugar; and/or
   wherein the protein is a milk, whey, egg, soy, pea, bean, barley or wheat protein, suitably a soy protein or a liquid whey; and/or
   wherein the liquid material comprises a protein concentration of from 0.1 to 28% w/v; and/or wherein the liquid material comprises from 1 to 60% total solids; and/or

wherein the liquid material comprises a protein concentration of more than 15% w/v; and/or wherein the ratio of protein to reducing sugar is about 1 g protein to 0.05 to 10 g reducing sugar; and/or

wherein the liquid material is heated for a time of between 1 minute and 24 hours; and/or

wherein the protein is denatured by said process by between 1 and 100% as compared to the non-denatured protein; and/or

wherein the reducing sugar is selected from one or more of the following : lactose, glucose, galactose, maltose, fructose, glucose-6-phosphate, gluconic acid, or any oligosaccharide, polysaccharide or saccharide conjugate that contains a reducing sugar, suitably wherein the reducing sugar is found naturally with the protein.

10. The process of any one preceding claim wherein the denaturation degree of the protein is monitored by measuring increase in turbidity, increase in free SH groups, increase in hydrophobicity or decrease in soluble nitrogen, typically at pH 4.5.

11. The process of claim 10 wherein the turbidity is measured by:

collecting a sample of the heated liquid material, diluting said collected sample in a buffer formulated so that the pH in said sample is substantially unchanged, the ionic conditions in said sample are substantially unchanged, and the viscosity of said sample is at least substantially maintained, all relative to the undiluted sample,

measuring the turbidity of said diluted sample relative to an untreated control sample;

comparing the turbidity measurement obtained with previously established turbidity measurement limits corresponding to a desired average protein aggregate size range; and

in the event of any deviations from the desired particle size, adjusting the heating so as to conform this to the desired value.

12. The process of any one preceding claim wherein the glycation degree is measured by monitoring the decrease in free amino groups.

13. The process of claim 12 wherein free amino groups are quantified by contacting said heated liquid material with 2,4,6-trinitrobenzenesulfonic acid (TNBS), a borate salt and an agent capable of dissociating any aggregated protein and measuring the absorbance resultant from said contacting; wherein suitably, said agent is urea.

**Patentansprüche**

1. Verfahren zum Glykieren und Denaturieren eines Globulins oder globulären Proteins in einem flüssigen Material, wobei das flüssige Material ferner einen reduzierenden Zucker enthält, wobei das Verfahren enthält:

Erhitzen des flüssigen Materials auf eine Temperatur von 55-95°C bei einem pH-Wert zwischen 5 und 9 für eine Zeit, die ausreicht, um das Protein sowohl zu denaturieren als auch zu glykieren; und

Steuern der Glykierung des Proteins und Steuern des Denaturierungsgrades des Proteins;

wobei das Steuern ein Messen in Echtzeit oder nahe der Echtzeit (at line measurement) mindestens eines Parameters, ausgewählt aus einem Aggregationsgrad, dargestellt durch Trübung, einem Denaturierungsgrad, dargestellt durch freie SH- Gruppen, und einem Glykierungsgrad, dargestellt durch freie Aminogruppen; und Einstellen des Erhitzens oder des pH-Wertes, falls erforderlich, in Reaktion auf den gemessenen Parameter, umfasst.

2. Verfahren nach Anspruch 1, wobei das Verfahren beendet wird, wenn das Steuern aufzeigt, dass das Protein einen gewünschten Glykierungsgrad erreicht hat, oder wenn das Steuern aufzeigt, dass das Protein einen gewünschten Denaturierungsgrad erreicht hat.

3. Verfahren nach Anspruch 1 oder Anspruch 2, wobei das Steuern ferner ein Vergleichen der Messung in Echtzeit oder nahe der Echtzeit von mindestens einem Parameter mit einem zuvor für den mindestens einen Parameter festgelegten Wert umfasst, wobei der zuvor festgelegte Wert einen Wert mindestens eines weiteren Parameters anzeigt.

4. Verfahren nach Anspruch 3, wobei mindestens ein weiterer Parameter aus Parametern, die sich auf den Glykierungsgrad des Proteins, die sich auf den Denaturierungsgrad des Proteins, und die sich auf funktionelle Eigenschaften des glykierten und denaturierten Proteins beziehen, ausgewählt wird.

5. Verfahren nach Anspruch 1, wobei der Denaturierungsgrad gesteuert wird durch:

Entnehmen einer Probe des erhitzten flüssigen Materials;
Mischen der entnommenen Probe mit einem chemischen SH- Gruppenreaktionsmesssystem;
Vergleichen der erhaltenen SH- Gruppenmessung mit zuvor festgelegten SH- Gruppenmessgrenzen, die einem gewünschten Denaturierungsgrad entsprechen; und
im Falle von Abweichungen von dem gewünschten Denaturierungsgrad, Einstellen des Heizens, so dass dieser dem gewünschten Wert entspricht.

6. Verfahren nach einem der Ansprüche 1 bis 5, weiterhin enthaltend ein Steuern eines Aggregationsgrads des Proteins, und wobei optional das Verfahren beendet wird, wenn das Steuern anzeigt, dass das Protein einen gewünschten Aggregationsgrad erreicht hat.

7. Verfahren nach Anspruch 6, wobei der Aggregationsgrad des Proteins gesteuert wird durch:

Entnehmen einer Probe des erhitzten flüssigen Materials;
Verdünnen der entnommenen Probe in einem Puffer, der so gestaltet ist, dass der pH-Wert in der Probe im Wesentlichen unverändert bleibt, die ionischen Zustände in der Probe im Wesentlichen unverändert bleiben und die Viskosität der Probe wenigstens im Wesentlichen beibehalten wird, alles relativ zu der unverdünnten Probe,
Messen der Trübung der verdünnten Probe relativ zu einer unbehandelten Kontrollprobe;
Vergleichen der erhaltenen Trübungsmessung mit zuvor festgelegten Trübungsmessgrenzen, die einem gewünschten durchschnittlichen Größenbereich der Proteinaggregate entsprechen; und
im Falle von Abweichungen von der gewünschten Partikelgröße, Einstellen des Heizens, so dass diese dem gewünschten Wert entspricht.

8. Verfahren nach einem der vorherstehenden Ansprüche, wobei das Verfahren durch Kühlen des erhitzten flüssigen Materials, vorzugsweise auf 55°C oder darunter, beendet wird.

9. Verfahren nach einem der vorherstehenden Ansprüche, wobei das flüssige Material eine wässrige Lösung, Dispersion oder Suspension ist, die das Protein und den reduzierenden Zucker enthält; und/oder
wobei das Protein ein Milch-, Molke-, Eier-, Soja-, Erbsen-, Gersten-, oder Weizenprotein, vorzugsweise ein Sojaprotein oder eine flüssige Molke ist; und/oder
wobei das flüssige Material eine Proteinkonzentration von 0,1 bis 28% m/V enthält; und/oder
wobei das flüssige Material 1 bis 60% Gesamtfeststoffe enthält; und/oder wobei das flüssige Material eine Proteinkonzentration von mehr als 15% m/V enthält; und/oder
wobei das Verhältnis von Protein zu reduzierendem Zucker etwa 1g Protein zu 0,05 bis 10g reduzierendem Zucker beträgt; und/oder wobei das flüssige Material für eine Zeit zwischen 1 Minute und 24 Stunden erhitzt wird; und/oder wobei das Protein durch das Verfahren zwischen 1 und 100% im Vergleich zu dem nicht denaturierten Protein denaturiert wird; und/oder wobei der reduzierende Zucker ausgewählt ist aus einem oder mehreren der folgenden: Lactose, Glucose, Galactose, Maltose, Fructose, Glucose-6-Phosphat, Gluconsäure oder einem beliebigen Oligosaccharid, Polysaccharid oder Saccharid-Konjugat, das einen reduzierenden Zucker enthält, wobei der reduzierende Zucker vorzugsweise naturgemäß mit dem Protein gefunden wird.

10. Verfahren nach einem der vorherstehenden Ansprüche, wobei der Denaturierungsgrad des Proteins durch Messen einer Zunahme der Trübung, einer Zunahme der freien SH-Gruppen, einer Zunahme der Hydrophobie oder einer Abnahme von löslichem Stickstoff, typischerweise bei einem pH-Wert von 4,5, überwacht wird.

11. Verfahren nach Anspruch 10, wobei die Trübung gemessen wird durch:

Entnehmen einer Probe des erhitzten flüssigen Materials;
Verdünnen der entnommenen Probe in einem Puffer, der so gestaltet ist, dass der pH-Wert in der Probe im Wesentlichen unverändert bleibt, die ionischen Zustände in der Probe im Wesentlichen unverändert bleiben und die Viskosität der Probe wenigstens im Wesentlichen beibehalten wird, alles relativ zu der unverdünnten Probe,
Messen der Trübung der verdünnten Probe relativ zu einer unbehandelten Kontrollprobe;

Vergleichen der erhaltenen Trübungsmessung mit zuvor festgelegten Trübungsmessgrenzen, die einem gewünschten durchschnittlichen Größenbereich der Proteinaggregate entsprechen; und
im Falle von Abweichungen von der gewünschten Partikelgröße, Einstellen des Heizens, so dass diese dem gewünschten Wert entspricht.

**12.** Verfahren nach einem der vorherstehenden Ansprüche, wobei der Glykierungsgrad durch Überwachen der Abnahme von freien Aminogruppen gemessen wird.

**13.** Verfahren nach Anspruch 12, wobei freie Aminogruppen quantifiziert werden, indem das erhitzte flüssige Material mit 2,4,6-Trinitrobenzolsulfonsäure (TNBS), einem Boratsalz und einem Mittel in Kontakt gebracht wird, das geeignet ist, jedes aggregierte Protein zu dissoziieren und die aus dem Kontakt resultierende Absorption zu messen; wobei das Mittel vorzugsweise Harnstoff ist.

## Revendications

**1.** Procédé de glycation et de dénaturation d'une globuline ou d'une protéine globulaire dans une substance liquide, ladite substance liquide comprenant en outre un sucre réducteur, ledit procédé comprenant :

le chauffage de ladite substance liquide à une température de 55-95°C à un pH compris entre 5 et 9 pendant un temps suffisant pour à la fois dénaturer et glyquer ladite protéine ; et
la vérification de la glycation de ladite protéine et la vérification du degré de dénaturation de ladite protéine ; dans lequel ladite vérification comprend la mesure en ligne d'au moins un paramètre choisi parmi le degré d'agrégation représenté par la turbidité, le degré de dénaturation représenté par les groupes SH libres, et le degré de glycation représenté par les groupes amino libres ; et l'ajustement du chauffage ou du pH, si besoin, en réponse au paramètre mesuré.

**2.** Procédé selon la revendication 1 dans lequel le procédé est arrêté quand ladite vérification révèle que ladite protéine a atteint un degré de glycation souhaité, ou quand ladite vérification révèle que ladite protéine a atteint un degré de dénaturation souhaité.

**3.** Procédé selon la revendication 1 ou la revendication 2, dans lequel ladite vérification comprend en outre la comparaison de la mesure en ligne d'au moins un paramètre avec une valeur précédemment établie pour ledit au moins un paramètre, où ladite valeur précédemment établie indique une valeur d'au moins un autre paramètre.

**4.** Procédé selon la revendication 3, dans lequel ledit au moins autre paramètre est choisi parmi les paramètres relatifs au degré de glycation de la protéine, les paramètres relatifs au degré de dénaturation de la protéine, et les propriétés fonctionnelles de la protéine glyquée et dénaturée.

**5.** Procédé selon la revendication 1, dans lequel le degré de dénaturation est vérifié par :

collecte d'un échantillon de la substance liquide chauffée ;
mélange dudit échantillon collecté avec un système de mesure des réactions des groupes chimiques -SH ;
comparaison de la mesure des groupes SH obtenue avec les limites de mesure des groupes SH précédemment établies correspondant à un degré de dénaturation souhaité ; et
en cas d'écarts par rapport au degré de dénaturation souhaité, ajustement du chauffage pour le conformer à la valeur souhaitée.

**6.** Procédé selon l'une quelconque des revendications 1 à 5 comprenant en outre la vérification d'un degré d'agrégation de ladite protéine, et éventuellement, où le procédé est arrêté quand ladite vérification révèle que ladite protéine a atteint un degré d'agrégation souhaité.

**7.** Procédé selon la revendication 6 dans lequel le degré d'agrégation de ladite protéine est vérifié par :

collecte d'un échantillon de la substance liquide chauffée ;
dilution dudit échantillon collecté dans un tampon formulé pour que le pH dans ledit échantillon soit sensiblement inchangé, que les conditions ioniques dans ledit échantillon soient sensiblement inchangées, et que la viscosité dudit échantillon soit au moins sensiblement maintenue, tous par rapport à l'échantillon non dilué,

mesure de la turbidité dudit échantillon dilué par rapport à un échantillon témoin non traité ;

comparaison de la mesure de turbidité obtenue avec les limites de mesure de turbidité précédemment établies correspondant à une plage de tailles d'agrégats protéiques moyennes souhaitée ; et

en cas d'écarts par rapport à la taille de particule souhaitée, ajustement du chauffage pour la conformer à la valeur souhaitée.

8. Procédé selon l'une quelconque des revendications précédentes dans lequel le procédé est arrêté par refroidissement de la substance liquide chauffée, de manière convenable à 55°C ou moins.

9. Procédé selon l'une quelconque des revendications précédentes dans lequel la substance liquide est une solution, une dispersion ou une suspension aqueuse comprenant ladite protéine et ledit sucre réducteur ; et/ou

dans lequel la protéine est une protéine de lait, petit-lait, oeuf, soja, pois, haricot, orge ou blé, de manière convenable une protéine de soja ou un petit-lait liquide ; et/ou

dans lequel la substance liquide a une concentration de protéine de 0,1 à 28 % p/v ; et/ou

dans lequel la substance liquide comprend de 1 à 60 % de fractions solides totales ; et/ou

dans lequel la substance liquide a une concentration de protéine supérieure à 15 % p/v ; et/ou

dans lequel le rapport protéine à sucre réducteur est d'environ 1 g de protéine pour 0,05-10 g de sucre réducteur ; et/ou

dans lequel la substance liquide est chauffée pendant un temps compris entre 1 minute et 24 heures ; et/ou

dans lequel la protéine est dénaturée par ledit procédé à hauteur de 1 à 100 % comparativement à la protéine non dénaturée ; et/ou

dans lequel le sucre réducteur est choisi parmi un ou plusieurs des suivants : lactose, glucose, galactose, maltose, fructose, glucose-6-phosphate, acide gluconique, ou tout conjugué oligosaccharidique, polysaccharidique ou saccharidique qui contient un sucre réducteur, où de manière convenable le sucre réducteur se trouve à l'état naturel dans la protéine.

10. Procédé selon l'une quelconque des revendications précédentes dans lequel le degré de dénaturation de la protéine est surveillé par mesure de l'accroissement de la turbidité, de l'accroissement des groupes SH libres, de l'accroissement du caractère hydrophobe ou de la réduction de l'azote soluble, généralement à pH 4,5.

11. Procédé selon la revendication 10 dans lequel la turbidité est mesurée par :

collecte d'un échantillon de la substance liquide chauffée,

dilution dudit échantillon collecté dans un tampon formulé pour que le pH dans ledit échantillon soit sensiblement inchangé, que les conditions ioniques dans ledit échantillon soient sensiblement inchangées, et que la viscosité dudit échantillon soit au moins sensiblement maintenue, tous par rapport à l'échantillon non dilué,

mesure de la turbidité dudit échantillon dilué par rapport à un échantillon témoin non traité ;

comparaison de la mesure de turbidité obtenue avec les limites de mesure de turbidité précédemment établies correspondant à une plage de tailles d'agrégats protéiques moyennes souhaitée ; et

en cas d'écarts par rapport à la taille de particule souhaitée, ajustement du chauffage pour la conformer à la valeur souhaitée.

12. Procédé selon l'une quelconque des revendications précédentes dans lequel le degré de glycation est mesuré par surveillance de la réduction du nombre de groupes amino libres.

13. Procédé selon la revendication 12 dans lequel les groupes amino libres sont quantifiés par mise en contact de ladite substance liquide chauffée avec un acide 2,4,6-trinitrobenzènesulfonique (TNBS), un sel de borate et un agent capable de dissocier toute protéine agrégée et mesure de l'absorbance résultant de ladite mise en contact ; où de manière convenable, ledit agent est l'urée.

*FIG. 1*

Heat treatment at 62°C

FIG. 2

Heat treatment at 62°C

FIG. 3

FIG. 4

FIG. 5

FIG. 6

FIG. 7

FIG. 8

FIG. 9

FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0018249 A
- US 6767575 B
- WO 0249442 A
- US 5494696 A
- US 5480973 A
- GB 2007003420 W

### Non-patent literature cited in the description

- Spray-drying handbook. Keith Masters. Longman Scientific & Technical
- **S.L. SNYDER ; P. Z. SOBOCIN.** *Analytical Biochemistry,* 1975, vol. 64, 284-288
- **N. KITABATAKE ; E. DOI.** *Journal of Agriculture and Food Chemistry,* 1987, vol. 35 (6), 953-957
- **K. SHIMADA ; J.C. CHEFTEL.** *Journal of Agriculture and Food Chemistry,* 1988, vol. 36 (1), 147-153
- **K. SHIMADA ; J.C. CHEFTEL.** *Journal of Agriculture and Food Chemistry,* 1989, vol. 37 (1), 161-168
- **SHIMADA, K. ; CHEFTEL, J. C.** *J. Agr. Food Chem.,* 1989, vol. 37, 161-168
- **HODGE J.E.** Dehydrated Foods. Chemistry of browning reactions in model systems. *Agric. Food Chem.,* 1953, vol. 1, 928-943
- **LABUZA, T.P. ; BAISIER ,W.M.** The kinetics of nonenzymatic browning. *In: Physical Chemistry f Foods,* 1992, 595-649
- **OLIVIER C.M.** Insight into Glycation of Milk Proteins: An ESI-and MALDI-MS. *Crit. Rev. in Food Sc and Nut.,* 2011, vol. 51, 410-431
- **S.L. SNYDER ; P.Z. SOBOCIN.** *Analytical Biochemistry,* 1975, vol. 64, 284-288
- **BRADFORD, M. M.** A rapid and sensitive method for the quantitation of microgram quantities of protein utilizing the principle of protein-dye binding. *Analytical Biochemistry,* 1976, vol. 72, 248-254
- **KOCHER, P. N. ; FOEGEDING, E. A.** Microcentrifuge-based methods for measuring water-holding of protein gels. *Journal of Food Science,* 1993, vol. 58, 1040-1046
- **SNYDER, S. L. ; SOBOCINSKI, P. Z.** An improved 2,4,-trinitrobenzesulfonicacid method for the determination of amines. *Analytical Biochemistry,* 1975, vol. 64, 284-288